# EUROPEAN PATENT SPECIFICATION

(11) **EP 4 140 249 B1**
(45) Date of publication and mention of the grant of the patent: **01.04.2026**
(21) Application number: 21730056.5
(22) Date of filing: 13.05.2021
(51) Int. Cl.: H04W 76/15, H04W 76/19, H04W 24/10, H04W 92/20

(54) **MANAGING COMMUNICATIONS IN THE EVENT OF MASTER CELL GROUP FAILURE**
VERWALTUNG VON KOMMUNIKATIONEN IM FALL EINES MASTER-ZELLENGRUPPENAUSFALLS
GESTION DE COMMUNICATIONS EN CAS DE DÉFAILLANCE D'UN GROUPE DE CELLULES MAÎTRESSES

(30) Priority: 13.05.2020 US 202063024363 P; 15.05.2020 US 202063025975 P
(43) Date of publication of application: 01.03.2023
(73) Proprietor: Google LLC, Mountain View, CA 94043 (US)
(72) Inventor: WU, Chih-Hsiang, Mountain View, CA 94043 (US)
(74) Representative: Marks & Clerk GST
(86) International application number: PCT/US2021/032297
(87) International publication number: WO 2021/231761

(56) References cited:
- US-A1- 2020 059 395

## Description

### TECHNICAL FIELD

This disclosure relates generally to wireless communications and, more particularly, to managing communications in the event of MCG failure while a user equipment (UE) is in dual connectivity with a master node (MN) and a secondary node (SN).

### BACKGROUND

A user device (or user equipment, commonly denoted by acronym "UE") in some cases can concurrently utilize resources of multiple network nodes, *e.g.,* base stations, interconnected by a backhaul. When these network nodes support the same radio access technology (RAT) or different RATs, this type of connectivity is referred to as Dual Connectivity (DC) or Multi-Radio DC (MR-DC), respectively. When a UE operates in DC or MR-DC, one base station operates as a master node (MN), and the other base station operates as a secondary node (SN). The backhaul can support an Xn interface, for example.

The MN can provide a control-plane connection and a user-plane connection to a core network (CN), whereas the SN generally provides a user-plane connection without a control-plane connection. The cells associated with the MN define a master cell group (MCG), and the cells associated with the SN define a secondary cell group (SCG). The UE and the base stations, MN and SN, can use signaling radio bearers (SRBs) to exchange radio resource control (RRC) messages, as well as non-access stratum (NAS) messages.

There are several types of SRBs that a UE can use when operating in DC. SRB 1 and SRB2 resources allow the UE and the MN to exchange RRC messages related to the MN and to embed RRC messages related to the SN. and can be referred to as MCG SRBs. SRB3 resources allow the UE and the SN to exchange RRC messages related to the SN, and can be referred to as an SCG SRB. Split SRBs allow the UE to exchange RRC messages directly with the MN by using radio resources of the MN, the SN, or both of the MN and SN. Further, the UE and the base stations (e.g., MN and SN) use data radio bearers (DRBs) to transport data on a user plane. The DRBs can be MN-terminated DRBs or SN-terminated DRBs. The MN terminated-DRBs using the lower-layer resources of only the MN can be referred as MCG DRBs, the SN-terminated DRBs using the lower-layer resources of only the SN can be referred as SCG DRBs, and the DRBs using the lower-layer resources of both the MN and the SN can be referred to as split DRBs.

To further enhance DC operations, the 3GPP organization also has proposed the so-called fast MCG recovery procedure. According to this procedure, when the UE operating in DC detects MCG failure, the UE suspends MCG transmissions for all radio bearers and reports the MCG failure with an *MCGFailureInformation* message to the SN via the SCG, using the SCG leg of split SRB1 or SRB3. In case of SRB3, the UE generates a *ULInformationTransferMRDC* message including the *MCGFailureInformation* message and transmits the *ULInformationTransferMRDC* message to the SN. Document US 2020/059395 Al discloses such as fast MCG recovery procedure.

Then the SN forwards the *MCGFailureInformation* message to the MN with an *RRC Transfer* message, so that the MN is notified of the MCG failure from the received *MCGFailureInformation* message. Upon reception of the *MCGFailureInformation* message from the SN, the MN can send an *RRC reconfiguration* message or *RRC release* message to the UE, by using the SCG leg of split SRB1 or SRB3. Upon receiving an *RRC reconfiguration* message, the UE resumes MCG transmissions for all radio bearers. Upon receiving an *RRC release* message, the UE releases all the radio bearers and configurations.

After the MCG has failed and while an MCG link is unavailable, the UE may initiate a non-access stratum (NAS) procedure to transmit a NAS message. For example, the NAS procedure can be related to an emergency service. However, it is not clear how the UE should process NAS messages after MCG failure. As a more specific example, it is not clear how the UE can transmit an uplink NAS message and perform the corresponding NAS procedure after MCG failure.

Further, when the MN receives the *MCGFailureInformation* message from the SN, the MN can send an *RRC reconfiguration* message or *RRC release* message to the UE, using the SCG leg of split SRB1 or SRB3. Upon receiving an *RRC reconfiguration* message, the UE resumes MCG transmissions for all radio bearers. However, the UE may not process the *RRC reconfiguration* message correctly when certain procedures (e.g., handover) are taking place. Moreover, the UE currently cannot provide measurement reports to the MN, which further prevents the MN from properly supporting handover procedures.

### SUMMARY

According to a first aspect, the present invention provides a method as defined by independent claim 1. According to a second aspect, the present invention provides a UE as defined by independent claim 8. According to a third aspect, the present invention provides a method as defined by independent claim 9. According to a fourth aspect, the present invention provides a base station as defined by independent claim 15.

### BRIEF DESCRIPTION OF THE DRAWINGS

Fig. 1A is a block diagram of an example system in which a radio access network (RAN) and a user device can implement the techniques of this disclosure for managing communication during MCG failure;
Fig. 1B is a block diagram of an example base station including a centralized unit (CU) and a distributed unit (DU) that can operate in the system of Fig. 1A;
Fig. 2 is a block diagram of an example protocol stack according to which the UE of Fig. 1A communicates with base stations;
Fig. 3 illustrates an example scenario in which a UE initiates a NAS procedure when the MCG failure has occurred, and uses radio resources of the SCG to transmit an uplink NAS message to the MN;
Fig. 4 illustrates an example scenario in which a UE suspends MCG transmission in response to detecting MCG failure, and resumes MCG transmissions only after MCG (fast) recovery;
Fig. 5A illustrates an example scenario similar to that of Fig. 4, but with the UE detecting MCG failure during RRC reconfiguration;
Fig. 5B illustrates an example scenario similar to that of Fig. 5A, but with the UE also ignoring (or discarding) RRC reconfiguration in response to detecting MCG failure;
Fig. 5C illustrates an example scenario similar to that of Fig. 5A or 5B, but with the UE suspending SCG transmission as well as the MCG transmission;
Fig. 6A is a flow diagram of an example method in a UE for determining whether the UE should communicate NAS messages using MCG resources or SCG resources, depending on whether MCG failure has been detected;
Fig. 6B is a flow diagram of an example method in a UE for determining whether the UE should communicate NAS messages using an MCG link or an SCG link of a split SRB, depending on whether MCG failure has been detected;
Fig. 7A is a flow diagram of an example method in a UE for determining whether the UE should suspend transmission of NAS messages or use SCG radio resources, depending on whether MCG fast recovery is enabled and whether MCG failure has been detected;
Fig. 7B is a flow diagram of an example method in a UE for determining whether the UE should suspend transmission of NAS messages or use an SCG link of a split SRB, depending on whether MCG fast recovery is enabled and whether MCG failure has been detected;
Fig. 8A is a flow diagram of an example method in a UE for determining whether the UE should suspend transmission of NAS messages or use an SCG link of a split SRB, depending on whether the SRB2 is a split SRB and whether MCG failure has been detected;
Fig. 8B is a flow diagram of an example method in a UE for determining whether the UE should suspend transmission of NAS messages or use an SCG link of a split SRB, depending on whether the SRB2 is a split SRB, whether an SRB3 is available, and whether MCG failure has been detected;
Fig. 9 is a flow diagram of an example method in a UE for determining whether the UE should resume MCG transmissions in response to receiving RRC reconfiguration from an SN, depending on the contents of the RRC reconfiguration;
Fig. 10A is a flow diagram of an example method in a UE for determining whether the UE should transmit a measurement report d using an SRB1 or SRB3, depending on whether MCG failure has been detected;
Fig. 10B is a flow diagram of an example method in a UE for determining whether the UE should transmit a measurement report using an MCG link or an SCG link of a split SRB, depending on whether MCG failure has been detected;
Fig. 11 is a flow diagram of an example method in a UE for determining whether the UE should transmit a measurement report using SRB1 or SRB3, depending on whether the measurement report pertains to the MN or the SN;
Fig. 12 is a flow diagram of an example method in an MN for determining whether the MN should communicate a NAS message with the UE using MCG radio resources or via an SN, depending on whether MCG failure has been detected;
Fig. 13 is a flow diagram of an example method in an MN for determining whether the MN should transmit a downlink information transfer message with the UE using MCG radio resources or via an SN, depending on whether MCG failure has been detected;
Fig. 14 is a flow diagram of an example method in an MN for performing an RRC reconfiguration procedure with a UE after detecting MCG failure for the UE;
Fig. 15 is a flow diagram of an example method in an MN for determining whether the MN should send an RRC reconfiguration message to the UE using MCG radio resources or via an SN, depending on whether MCG failure has been detected;
Fig. 16 is a flow diagram of an example method in an SN for forwarding an RRC message received from a UE, to the MN;
Fig. 17A is a flow diagram of an example method in a UE for determining whether the UE should transmit a response to a message from the MN using MCG radio resources or SCG radio resources, depending on whether MCG failure has been detected;
Fig. 17B is a flow diagram of an example method in a UE for determining whether the UE should transmit a response to a message from the SN using MCG radio resources or SCG radio resources, depending on whether SCG failure has been detected;
Fig. 17C is a flow diagram of an example method in a UE for determining whether the UE should ignore a message received from an MN or SN, depending on whether SCG failure has been detected;
Fig. 18 is a flow diagram of an example method in a UE for determining whether the UE should ignore an RRC message from an MN or transmit a response to the message, depending on whether MCG failure has been detected;
Fig. 19 is a flow diagram of an example method in a UE for determining whether the UE should perform an RRC connection reestablishment procedure or indicate MCG failure to the SN, after detecting MCG failure and depending on whether an MN-initiated RRC reconfiguration procedure is in progress; and
Fig. 20 is a flow diagram of a method in a UE for determining whether the UE should transmit an uplink message to the MN after recovering from MCG failure, depending on whether the message is pending when the MCG failure occurs.

### DETAILED DESCRIPTION OF THE DRAWINGS

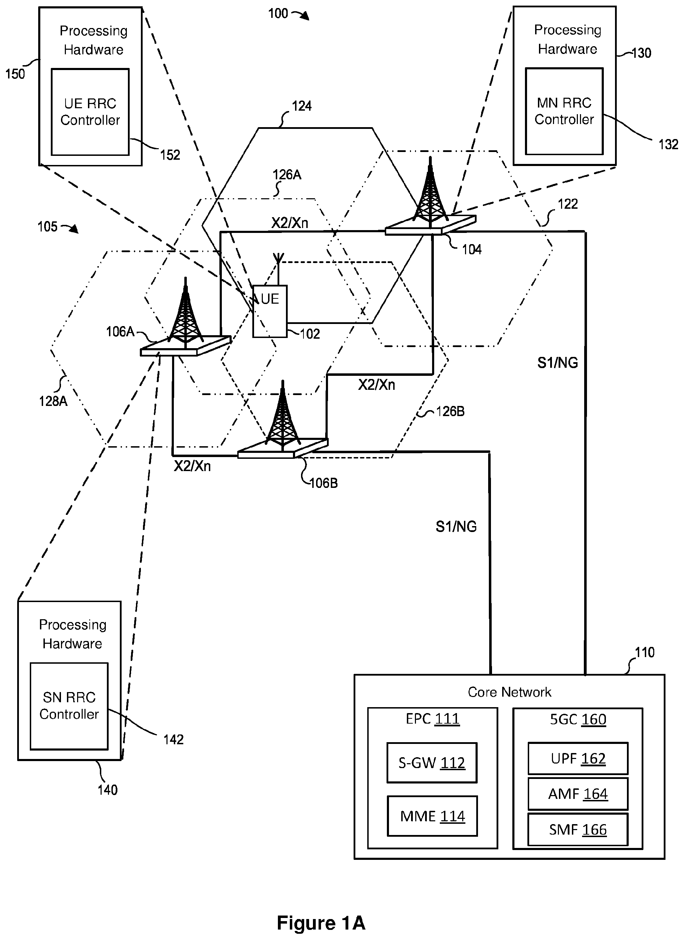

Fig. 1A depicts an example wireless communication system 100 in which communication devices can implement the communication techniques of this disclosure. The wireless communication system 100 includes a UE 102, a base station 104, a base station 106A, a base station 106B and a core network (CN) 110. The UE 102 initially connects to the base station 104.

Among other components, the EPC 111 can include a Serving Gateway (S-GW) 112 and a Mobility Management Entity (MME) 114. The S-GW 112 in general is configured to transfer user-plane packets related to audio calls, video calls, Internet traffic, etc., and the MME 114 is configured to manage authentication, registration, paging, and other related functions. The 5GC 160 includes a User Plane Function (UPF) 162 and an Access and Mobility Management (AMF) 164, and/or Session Management Function (SMF) 166. Generally speaking, the UPF 162 is configured to transfer user-plane packets related to audio calls, video calls, Internet traffic, etc., the AMF 164 is configured to manage authentication, registration, paging, and other related functions, and the SMF 166 is configured to manage PDU sessions.

As illustrated in Fig. 1A, the base station 104 supports a cell 124, the base station 106A supports a cell 126A and the base station 106B supports a cell 126B. The base station 104 can additionally support a cell 122, the base station 106A can additionally support a cell 128A. The cells 124A and 126A can partially overlap, so that the UE 102 can communicate in DC with the base station 104A and the base station 106A operating as a master node (MN) and a secondary node (SN), respectively. To directly exchange messages during DC scenarios and other scenarios discussed below, the MN 104A and the SN 106A can support an X2 or Xn interface. In general, the CN 110 can connect to any suitable number of base stations supporting NR cells and/or EUTRA cells.

In some scenarios, the base station 104 performs an immediate (unconditional) SN addition procedure to configure the UE 102 to operate in DC with the base station 104 and the base station 106A. The base stations 104 and 106A begin to operate as an MN and an SN for the UE 102, respectively. At a later time, the MN 104 can perform an immediate SN change to change the SN of the UE 102 from the base station 106A (source SN, or "S-SN") to the base station 106B (target SN, or "T-SN") while the UE 102 is in DC with the MN 104 and the S-SN 106A.

In some scenarios, the UE 102 may detect a master cell group (MCG) failure, while the UE 102 is DC with the MN 104 and SN 106A, and the MN 104 accordingly provides MCG radio resources. In response to the detection, the UE 102 may transmit an MCG failure information message to the SN 106A via radio resources of the SN 106A (i.e., via secondary cell group (SCG) radio resources). In one implementation, the SN 106A may forward the MCG failure information message in an interface message (e.g., RRC Transfer message) to the MN 104, if the MN 104 is configured to process the MCG failure information message. In response to receiving the MCG failure information message, the MN 104 may send the UE 102 an MCG failure recovery message for recovering the MCG failure via SCG radio resources. In one implementation, the MN 104 can send an interface message (e.g., RRC Transfer message) including the MCG failure recovery message to the SN 106A. The SN 106A may allocate the SCG radio resources to the UE 102. For example, the SCG radio resources include one or more physical resource blocks, resource elements or subcarriers in a time unit. The time unit can be one or more ODFM symbols, slots or subframes. The UE 102 attempts to recover the MCG failure according to the MCG failure recovery message.

With continued reference to Fig. 1A, the base station 104 is equipped with processing hardware 130 that can include one or more general-purpose processors such as CPUs and non-transitory computer-readable memory storing machine-readable instructions executable on the one or more general-purpose processors, and/or special-purpose processing units. The processing hardware 130 in an example implementation includes an MN RRC controller 132 configured to manage or control one or more RRC configurations or RRC procedures when the base station 104 operates as an MN.

The base station 106A is equipped with processing hardware 140 that can also include one or more general-purpose processors such as CPUs and non-transitory computer-readable memory storing machine-readable instructions executable on the one or more general-purpose processors, and/or special-purpose processing units. The processing hardware 140 in an example implementation includes an SN RRC controller 142 configured to manage or control one or more RRC configurations and/or RRC procedures when the base station 106A operates as an SN or a candidate SN. The base station 106B can have hardware same as or similar to the base station 104 or the base station 106A.

Although Fig. 1A illustrates the RRC controllers 132 and 142 as operating in an MN and a SN, respectively, a base station generally can operate as an MN and/or an SN in different scenarios. Thus, the base station 104, base station 104A, and the base station 106B can implement similar sets of functions and support both MN and/or SN.

Still referring to Fig. 1A, the UE 102 is equipped with processing hardware 150 that can include one or more general-purpose processors such as CPUs and non-transitory computer-readable memory storing machine-readable instructions executable on the one or more general-purpose processors, and/or special-purpose processing units. The processing hardware 150 in an example implementation includes a UE RRC controller 152 configured to manage or control one or more RRC configurations and/or RRC procedures with the RAN 105 (*e.g.,* MN 104A and/or the SN 106A).

More particularly, the RRC resume controllers 132, 142, and 152 can implement at least some of the techniques discussed with reference to the messaging and flow diagrams below to manage RRC configurations. Although Fig. 1A illustrates the RRC controllers 132 and 142 as separate components, in at least some of the scenarios the base stations 104A and 106A can have similar implementations and in different scenarios operate as MN or SN nodes. In these implementations, the base stations 104 and 106A can implement the RRC controller 132 and the RRC controller 142 to support MN and SN functionality, respectively.

In operation, the UE 102 can use a radio bearer (*e.g.,* a DRB or an SRB) that in different scenarios terminates at the MN 104 or the SN 106A. The UE 102 can receive a radio bearer configuration configuring the radio bearer from the MN 104 or the SN 106A. The UE 102 can apply one or more security keys when communicating on the radio bearer, in the uplink (from the UE 102 to a base station) and/or downlink (from a base station to the UE 102) direction. The UE in some cases can use different RATs to communicate with the base stations 104 and 106A. Although the examples below refer specifically to specific CN types (EPC, 5GC) and RAT types (5G NR and EUTRA), in general the techniques of this disclosure also can apply to other suitable radio access and/or core network technologies such as sixth generation (6G) radio access and/or 6G core network or 5G NR-6G DC.

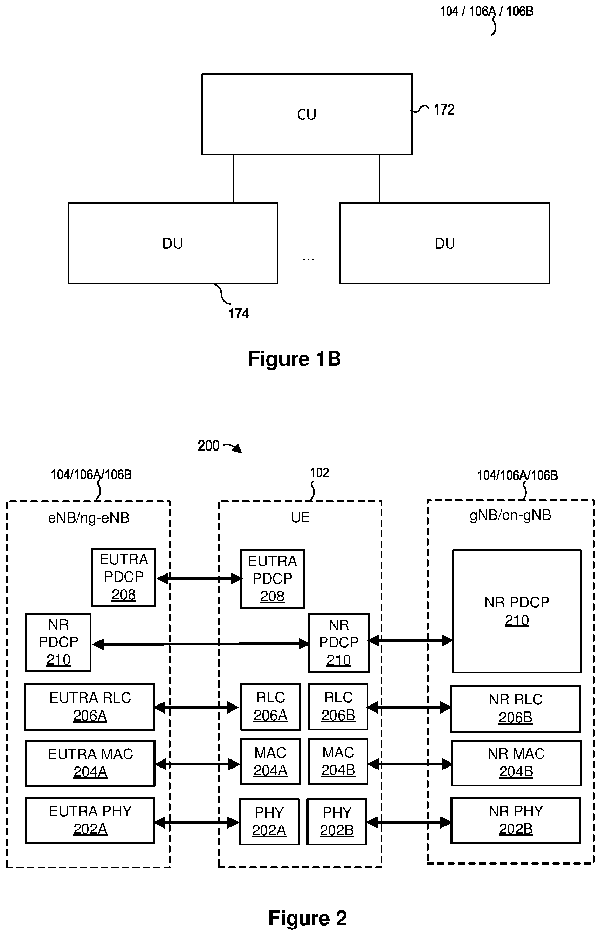

Fig. 1B depicts an example distributed implementation of a base station such as the base station 104, 106A, or 106B. The base station in this implementation can include a centralized unit (CU) 172 and one or more distributed units (DUs) 174. The CU 172 is equipped with processing hardware that can include one or more general-purpose processors such as CPUs and non-transitory computer-readable memory storing machine-readable instructions executable on the one or more general-purpose processors, and/or special-purpose processing units. In one example, the CU 172 is equipped with the processing hardware 130. In another example, the CU 172 is equipped with the processing hardware 140. The DU 174 is also equipped with processing hardware that can include one or more general-purpose processors such as CPUs and non-transitory computer-readable memory storing machine-readable instructions executable on the one or more general-purpose processors, and/or special-purpose processing units. In some examples, the processing hardware in an example implementation includes a medium access control (MAC) controller configured to manage or control one or more MAC operations or procedures (*e.g.,* a random access procedure) and a radio link control (RLC) controller configured to manage or control one or more RLC operations or procedures when the base station 104, 106A or 106B operates as an MN or an SN. The process hardware may include further a physical layer controller configured to manage or control one or more physical layer operations or procedures.

Fig. 2 illustrates, in a simplified manner, an example radio protocol stack 200 according to which the UE 102 may communicate with an eNB/ng-eNB or a gNB (*e.g.,* one or more of the base stations 104A, 104B, 106A, 106B). In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to the EUTRA PDCP sublayer 208 and, in some cases, to the NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides RLC channels to the NR PDCP sublayer 210. The UE 102, in some implementations, supports both the EUTRA and the NR stack as shown in Fig. 2, to support handover between EUTRA and NR base stations and/or to support DC over EUTRA and NR interfaces. Further, as illustrated in Fig. 2, the UE 102 can support layering of NR PDCP sublayer 210 over the EUTRA RLC sublayer 206A.

The EUTRA PDCP sublayer 208 and the NR PDCP sublayer 210 receive packets (*e.g.,* from an Internet Protocol (IP) layer, layered directly or indirectly over the PDCP layer 208 or 210) that can be referred to as service data units (SDUs), and output packets (*e.g.,* to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide SRBs to exchange RRC messages, for example. On a user plane, the EUTRA PDCP sublayer 208 and the NR PDCP sublayer 210 can provide DRBs to support data exchange.

In scenarios where the UE 102 operates in EUTRA/NR DC (EN-DC), with the base station 104A operating as an MeNB and the base station 106A operating as an SgNB, the wireless communication system 100 can provide the UE 102 with an MN-terminated bearer that uses the EUTRA PDCP sublayer 208, or an MN-terminated bearer that uses the NR PDCP sublayer 210. The wireless communication system 100 in various scenarios can also provide the UE 102 with an SN-terminated bearer, which uses only the NR PDCP sublayer 210. The MN-terminated bearer can be an MCG bearer, a SCG bearer, or a split bearer. The SN-terminated bearer can be, an MCG bearer, an SCG bearer or a split bearer. The MN-terminated bearer can be an SRB (*e.g.,* SRB1 or SRB2) or a DRB. The SN-terminated bearer can an SRB or a DRB.

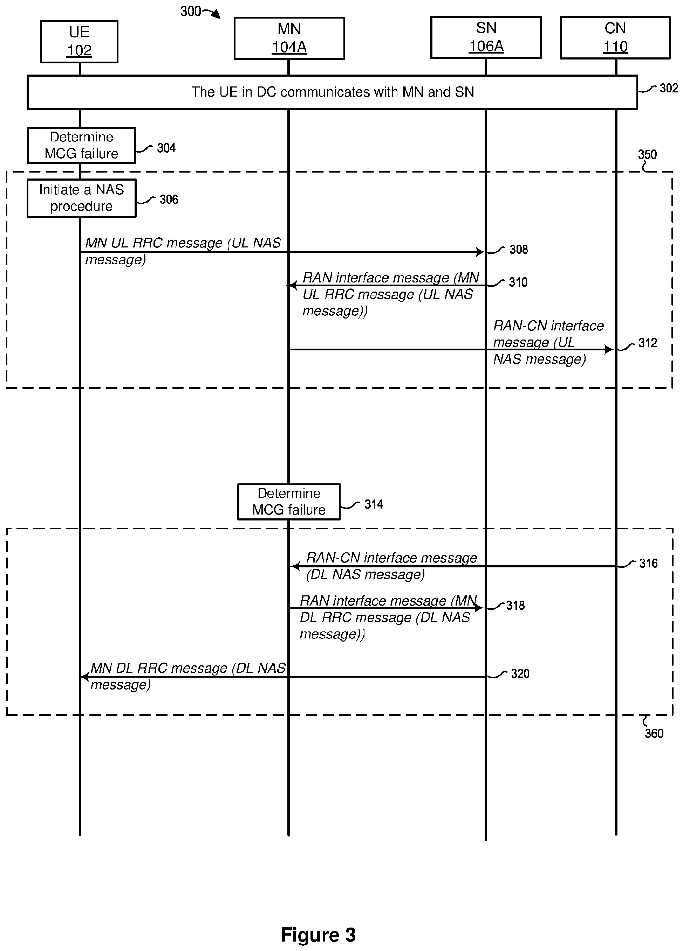

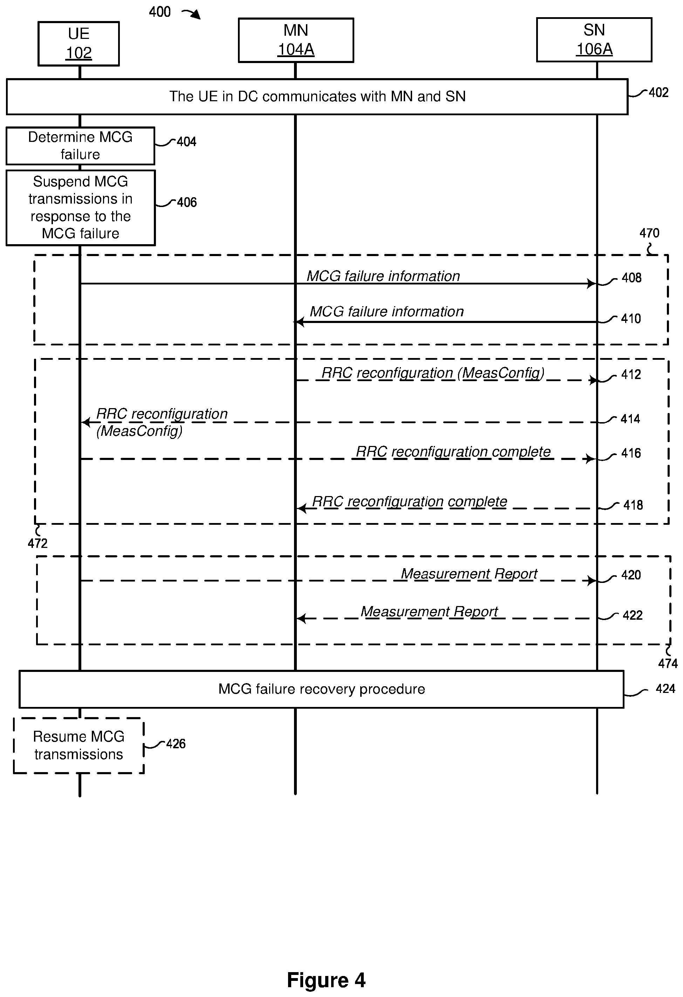

Next, several example scenarios useful for understanding the invention, in which the UE and the base stations operating in the system of Fig. 1A manage communication during MCG failure between the UE 102 and the RAN 105 are discussed next with reference to Figs. 3 and 4.

Referring first to Fig. 3, the base station 104 in a scenario 300 operates as an MN, and the base station 106A operates as an SN. Initially, the UE 102 is 302 in DC with the MN 104 and the SN 106A. The UE 102 in DC communicates 302 UL PDUs and/or DL PDUs with the MN 104A and SN 106A. In some implementations, the UE 102 in DC can communicate 302 UL PDUs and/or DL PDUs via radio bearers which can include SRBs and/or DRB(s). The MN 104 and/or the SN 106A can configure the radio bearers to the UE 102.

At a later time, the UE 102 determines 304 MCG failure, e.g., radio link failure on an MCG link configured by the MN 104 or reconfiguration failure. In response to the determination 304, the UE 102 can perform an MCG failure reporting procedure 470 as discussed below with reference to Fig. 4. After determining the MCG failure 304, the UE 102 can initiate 306 a non-access-stratum (NAS) procedure. In response to the initiation, the UE 102 includes a UL NAS message in a MN UL RRC message and transmits 308 the MN UL RRC message to the SN 106A, which in turn sends a RAN interface message including the MN UL RRC message to the MN 104. After receiving the RAN interface message, the MN 104 extracts the UL NAS message from the MN UL RRC message and includes the UL NAS message in a RAN-CN interface message. Then the MN 104 sends 312 the RAN-CN interface message to core network (CN) 110 (*e.g.,* AMF 164 or MME 114).

Similarly, the MN 104 can determine 314 an MCG failure on an MCG link with the UE 102 while the UE 102 is in DC with the MN 104 and the SN 106A. In some implementations, the MN 104 determines the MCG failure due to receiving an *MCG failure information* message in the MCG failure reporting procedure 470. In other implementations, the MN 104 determines the MCG failure in response to not receiving a PDU or control signal(s) from the UE 102. For example, the PDU can be a MAC, RLC or PDCP PDU. In another example, the PDU can include an RRC message. The UE 102 can transmit the control signal(s) on control channel(s) which can be e.g., physical uplink control channel(s) (PUCCH(s)). In yet other implementations, the MN 104 determines the MCG failure in response to receiving channel state information from the UE 102, which provides invalid measurements or indicates that the downlink channel quality is bad, e.g., below a certain quality threshold. The events 306, 308, 310 and 312 are collectively referred to in Fig. 3 as a UL NAS transmission procedure 350.

After determining the MCG failure 314, the MN 104 can receive 316 a RAN-CN interface message including a DL NAS message from the CN 110. The MN 104 extracts the DL NAS message from the RAN-CN interface message, includes the DL NAS message in a MN DL RRC message and includes the MN DL RRC message in a RAN interface message. The MN then 104 sends 318 the RAN interface message to the SN 106A. The SN 106A extracts the MN DL RRC message from the RAN interface message and transmits 320 the MN DL RRC message to the UE 102. The events 316, 318 and 320 are collectively referred to in Fig. 3 as a DL NAS transmission procedure 360.

In some implementations, the UL NAS transmission procedure 350 and the DL NAS transmission procedure 360 can occur in parallel. In other implementations, the DL NAS transmission procedure 360 can occur after or before the UL NAS transmission procedure 350. In some implementations, there can be a dependency between the UL NAS message and the DL NAS message. For example, the DL NAS message can be responsive to the UL NAS message. In another example, the UL NAS message can be responsive to the DL NAS message. In other implementations, there can be no dependency between the UL NAS message and the DL NAS message, and these messages can be associated with different respective NAS procedures.

In some implementations, the MN UL RRC message of the event 308 can be a *ULInformationTransfer* message, the RAN interface message of the event 310 can be a X2 or Xn message, and the RAN-CN interface message of the event 312 can be a S1 application protocol (S1AP) message or a NG application protocol (NGAP) message. The X2 or Xn message can be an *RRC Transfer* message or a SN message (e.g., *SN Modification Required* message). The S1AP or NGAP message can be a UL NAS Transport message. In some implementations, during the MCG failure (in other words, after the UE 102 has detected 304 MCG failure and prior to the UE determining that MCG recovery has successfully completed), the UE 102 can transmit the MN UL RRC message (e.g., the *ULInformationTransfer* message) on a SCG link (i.e., SCG radio resources or SN radio resources) of a split SRB (e.g., split SRB1 or split SRB2) to the SN 106A. The SN 106A can include the MN UL RRC message in a *UE Report* IE or a *Split SRB* IE in the *RRC Transfer* message. In one implementation, the UE 102 can set a primary path of the split SRB from "MCG" to "SCG" in response to the MCG failure. The UE 102 can set the primary path from "SCG" to "MCG" in response to an MCG fast recovery procedure like the MCG fast recovery procedure 424. In other implementations, during the MCG failure, the UE 102 can transmit the MN UL RRC message (e.g., the *ULInformationTransfer* message) on SRB3 to the SN 106A. In one implementation, the UE 102 can include the MN UL RRC message in a SN UL RRC message (e.g., *UEInformationTransferMRDC* message) and transmits the SN UL RRC message to the SN 106A on SRB3. The SN 106A extracts the MN UL RRC message from the SN UL RRC message. The SN 106A can include the MN UL RRC message in a *Fast MCG Recovery via SRB3 from SN to MN* IE in the *RRC Transfer* message.

In some implementations, the MN DL RRC message of the event 320 can be a *DLInformationTransfer* message, the RAN interface message of the event 318 can be a X2 or Xn message, and the RAN-CN interface message of the event 316 can be a S1 application protocol (S1AP) message or a NG application protocol (NGAP) message. The X2 or Xn message can be an *RRC Transfer* message or a SN message (e.g., *SN Modification Required* message). The S1AP or NGAP message can be a DL NAS Transport message. In some implementations, during the MCG failure, the MN 104 can send the MN DL RRC message to the SN 106A, which in turn transmits the MN DL RRC message on a SCG link (i.e., SCG radio resources or SN radio resources) of the split SRB (e.g., SRB1 or SRB2) to the UE 102. The MN 104 can include the MN DL RRC message in a *Split SRB* IE in the *RRC Transfer* message. In other implementations, during the MCG failure, the MN 104 can send a RAN interface message including the MN DL RRC message to the SN 106A, which in turn transmits the MN DL RRC message on SRB3 to the UE 102. The MN 104 can include the MN DL RRC message in a *Fast MCG Recovery via SRB3 from MN to SN* IE in the *RRC Transfer* message. In one implementation, the SN 106A can include the MN DL RRC message in a SN DL RRC message (e.g., *DLInformationTransferMRDC* message) and transmits the SN DL RRC message to the UE 102 on SRB3. The UE 102 extracts the MN DL RRC message from the SN DL RRC message.

In some scenarios or implementations, the MN 104 can send a *SN Addition Request* message to the base station 106A to configure the base station 106A as a SN for the UE 102 before the event 302. In response, the SN 106A transmits a *SN Addition Request Acknowledge* message including an *RRC reconfiguration* message to the MN 104. Then the MN 104 transmits an *RRC container* message including the *RRC reconfiguration* message to the UE 102 via MCG radio resources. The UE 102 can transmit an *RRC container response* message to the MN 104 in response to the *RRC container* message via MCG radio resources. After receiving the *RRC container response* message, the MN 104 can send a *SN Reconfiguration Complete* message to the SN 106A to indicate to the SN 106A that the UE 102 successfully receives or applies the *RRC reconfiguration* message. In one implementation, the UE 102 can include an *RRC reconfiguration complete* message in the *RRC container* message to respond the *RRC reconfiguration* message and the MN 104 can include the *RRC reconfiguration complete* message in the *SN Reconfiguration Complete* message.

The MN 104 can receive a UE capability of the UE 102 from the UE 102 in a *UECapabilityInformation* message, from another base station (e.g., base station 106B) in a RAN interface message or from the CN 110 in a RAN-CN interface message. The UE capability indicates the UE 102 is capable of MCG fast recovery function (i.e., the UE 102 is capable of performing the MCG failure reporting procedure 470 and the MCG failure recovery procedure 424). In some implementations, the MN 104 can configure the UE 102 to enable the MCG fast recovery function in the *RRC container* message, because the MN 104 determines that the UE 102 supports the MCG fast recovery function according to the UE capability and the SN 106A supports MCG fast recovery operation (i.e., the SN 106A can forward a MN UL RRC message (received from the UE 102) to the MN 104 and/or forward a MN DL RRC message (received from the MN 104) to the UE 102, e.g., as described in Fig. 3 4). In some implementations, the RAN interface message can be an X2 message or an Xn message (e.g., *Handover Request* message or *Retrieve UE Context Request message).* The RAN-CN interface message can be an S1AP message or a NGAP message (e.g., *Initial Context Setup Request* message or *Handover Request* message). In some implementations, the SN 106A can indicate support of the MCG fast recovery operation in the *SN Addition Request Acknowledge* message, so that the MN 104 can determine the SN 106A supports the MCG fast recovery operation. In other implementations, the MN 104 can determine the SN 106A supports the MCG fast recovery operation according to a pre-configuration. In other implementations, the MN 104 can determine the SN 106A supports the MCG fast recovery operation according to a received indication from an operation and maintenance (O&M) server. Alternatively, the MN 104 can configure the UE 10 to enable the MCG fast recovery function in another *RRC container* message (i.e., a second *RRC container* message) and transmit the second *RRC container* message to the UE 102 after the UE 102 is in DC with the MN 104 and SN 106A. The UE 102 can transmit a second *RRC container response* message to the MN 104 in response to the second *RRC container* message.

If the MN 104 determines that a UE (e.g., the UE 102 or another UE) does not support the MCG fast recovery function or the SN 106A does not support MCG fast recovery operation, the MN 104 does not configure the UE to enable the MCG fast recovery function, according to an example implementation.

In some implementations, the MN 104 can include at least one radio bearer configuration (e.g., *RadioBearerConfig* IE(s)) in the *RRC container* message to configure (i.e., add or modifie) one or more radio bearers which can be MN-terminated bearer(s) or SN-terminated bearer(s). The one or more radio bearers can include DRB(s), the SRB3, the split SRB1, and/or the split SRB2. The one or more radio bearers can include a non-split SRB1 or a non-split SRB2 instead of the split SRB1 or the split SRB2. The UE 102 configures the one or more radio bearers according to the at least one radio bearer configuration. In one implementation, the MN 104 can receive one of the at least one radio bearer configuration from the SN 106A in the *SN Addition Request Acknowledge* message and include the radio bearer configuration in the *RRC container* message. In another implementation, the MN 104 can generate one of the radio bearer configurations and include the radio bearer configuration in the *RRC container* message. Alternatively, the MN 104 can include the at least one radio bearer configuration (e.g., *RadioBearerConfig* IE(s)) in another *RRC container* message (i.e., a third *RRC container* message) and transmit the third *RRC container* message to the UE 102 after the UE 102 is in DC with the MN 104 and SN 106A. The UE 102 can transmit a third *RRC container response* message to the MN 104 in response to the third *RRC container* message. The third *RRC container* message and third *RRC container response* message can be the same as or different from the second *RRC container* message and second *RRC container response* message.

After receiving the *RRC reconfiguration* message, the UE 102 can perform a random access procedure on cell 126A with the SN 106A to connect to the SN 106A by using one or more random access configuration in the RRC reconfiguration. Once the UE 102 successfully completes the random access procedure on the cell 126A, the UE 102 in DC with the MN 104 and the SN 106A can communicate data (user-plane data or control-plane data) with the MN 104 via MCG radio resources and with the SN 106A through the cell 126A via SCG radio resources. Similarly, once the SN 106A identifies the UE 102 in the random access procedure, the SN 106A then can communicate data (user-plane data or control-plane data) with the UE 102 through the cell 126A.

In some implementations, if the MN 104 is a gNB, the *RRC container* message and the *RRC container response* message can be an *RRCReconfiguration* message and an *RRCReconfigurationComplete* message, respectively. In other implementations, if the MN 104 is an eNB or ng-eNB, the *RRC container* message and the *RRC container response* message can be an *RRCConnectionReconfiguration* message and an *RRCConnectionReconfigurationComplete* message, respectively.

In some implementations, if the SN 106A is a gNB, the *RRC reconfiguration* message and the *RRC reconfiguration complete* message can be an *RRCReconfiguration* message and an *RRCReconfigurationComplete* message, respectively. In other implementations, if the SN 106A is an eNB or ng-eNB, the *RRC reconfiguration* message and the *RRC reconfiguration complete* message can be an *RRCConnectionReconfiguration* message and an *RRCConnectionReconfigurationComplete* message, respectively.

In some implementations, the NAS procedure can be an EPS mobility management (EMM) procedure or EPS session management (ESM) procedure and the UL NAS message can be an EMM or ESM message as specified in 3GPP TS 24.301. In other implementations, the NAS procedure can be a 5G mobility management (5GMM) or 5G session management (5GSM) procedure and the UL NAS message can be an 5GMM or 5GSM message as specified in 3GPP TS 24.501. For example, the UL NAS message can be a *TRACKING AREA UPDATE REQUEST* message, a *TRACKING AREA UPDATE COMPLETE* message, a *REGISTRATION REQUEST* message, a *REGISTRATION COMPLETE* message, a *SERVICE REQUEST* message, an *EXTENDED SERVICE REQUEST* message, a *UL NAS TRANSPORT* message, a *UL GENERIC NAS TRANSPORT* message, a *DETACH REQUEST* message, a *DEREGISTRATION REQUEST* message, an *ACTIVATE DEDICATED EPS BEARER CONTEXT ACCEPT* message, *DEACTIVATE EPS BEARER CONTEXT ACCEPT* message, and a *PDU SESSION MODIFICATION COMPLETE* message.

In some implementations, the DL NAS message can be an EMM or ESM message as specified in 3GPP TS 24.301. In other implementations, the DL NAS message can be an 5GMM or 5GSM message as specified in 3GPP TS 24.501. For example, the DL NAS message can be a *TRACKING AREA UPDATE ACCEPT* message, a *REGISTRATION ACCEPT* message, a *SERVICE ACCEPT* message, a *DL NAS TRANSPORT* message, a *DL GENERIC NAS TRANSPORT* message, a *DETACH REQUEST* message, a *DETACH ACCEPT* message, a *DEREGISTRATION REQUEST* message, a *DEREGISTRATION ACCEPT* message, an *ACTIVATE DEDICATED EPS BEARER CONTEXT REQUEST* message, a *DEACTIVATE EPS BEARER CONTEXT REQUEST* message, and a *PDU SESSION MODIFICATION COMMAND* message.

Now referring to Fig. 4, a scenario 400 involves an MCG fast recovery procedure. In this scenario, the base station 104 operates as an MN, and the base station 106A operates as an SN. Initially, the UE 102 is 402 in DC with the MN 104A and the SN 106A, similar to event 302.

At a later time, the UE 102 determines 404 MCG failure (e.g., radio link failure on an MCG link configured by the MN 104). In response to the determination 404, the UE 102 can suspend 406 MCG transmissions (i.e., suspend transmissions on all of MCG link(s) with the MN 104) and transmit 408 an *MCG failure information* message to the SN 106A, which in turn sends 410 the *MCG failure information* message to the MN 104. The events 408 and 410 are collectively referred to in Fig. 4 as an MCG failure reporting procedure 470.

In some implementations, the UE 102 can include first measurement result(s) in the *MCG failure information* message. The UE 102 can perform measurements (e.g., intra-frequency measurements, inter-frequency measurements or inter-RAT measurements) according to a first measurement configuration, obtain the first measurement result(s) from the measurements and include the measurement result(s) in the *MCG failure information* message. After receiving the first measurement result(s), the MN 104 can perform 424 an MCG failure recovery procedure (details described below) via the SN 106A with the UE 102 to recover the MCG failure, in one implementation. In some implementations, before the MCG failure (e.g., at event 402), the MN 104 can transmit an RRC reconfiguration message configuring the first measurement configuration to the UE, e.g., by using an MCG link (i.e., MN radio resources or MCG radio resources) or SRB1. In response, the UE transmits an RRC reconfiguration complete message to the MN 104, e.g., by using an MCG link (i.e., MN radio resources or MCG radio resources) or the SRB1. The first measurement configuration can configure the UE 102 to perform intra-frequency measurements, inter-frequency measurements or inter-RAT measurements. For example, the MN 104 can configure the UE 102 to perform measurements on a carrier frequency other than a serving carrier frequency of the PCell 124 in the first measurement configuration. In another example, the MN 104 can configure the UE 102 to perform measurements on a serving carrier frequency of the PCell 124 in the first measurement configuration. If the MN 104 is a gNB, the MN 104 can configure the UE 102 to perform measurements on an EUTRA carrier frequency for inter-RAT measurements in the first measurement configuration. If the MN 104 is an eNB or ng-eNB, the MN 104 can configure the UE 102 to perform measurements on an NR carrier frequency for inter-RAT measurements in the first measurement configuration. In yet another example, the MN 104 can configure the UE 102 to measure an UTRA carrier frequency for inter-RAT measurements in the first measurement configuration. In yet another example, the MN 104 can configure the UE 102 to perform measurements on a GSM carrier frequency for inter-RAT measurements in the first measurement configuration.

In some implementations, after receiving the *MCG failure information* message, the MN 104 can send 412 an *RRC reconfiguration* message including a second measurement configuration (*e.g., MeasConfig* IE) to the SN 106A, which in turn transmits 414 the *RRC reconfiguration* to the UE 102. In response, the UE 102 can transmit 416 an *RRC reconfiguration complete* message to the SN 106A, which in turn sends 418 the RRC reconfiguration complete message to the MN 104. The second measurement configuration can configure the UE 102 to perform intra-frequency measurements, inter-frequency measurements or inter-RAT measurements. For example, the MN 104 can configure the UE 102 to perform measurements on a carrier frequency other than a serving carrier frequency of the PCell 124 in the second measurement configuration. In another example, the MN 104 can configure the UE 102 to perform measurements on a serving carrier frequency of the PCell 124 in the second measurement configuration. If the MN 104 is a gNB, the MN 104 can configure the UE 102 to perform measurements on an EUTRA carrier frequency for inter-RAT measurements in the second measurement configuration. If the MN 104 is an eNB or ng-eNB, the MN 104 can configure the UE 102 to perform measurements on an NR carrier frequency for inter-RAT measurements in the second measurement configuration. In yet another example, the MN 104 can configure the UE 102 to measure an UTRA carrier frequency for inter-RAT measurements in the second measurement configuration. In yet another example, the MN 104 can configure the UE 102 to perform measurements on a GSM carrier frequency for inter-RAT measurements in the second measurement configuration. The events 412, 414, 416, and 418 are collectively referred to in Fig. 4 as a measurement configuration procedure 472. The UE 102 does not resume MCG transmissions in response to the measurement configuration procedure 472.

The MN 104 can configure the first and second measurement configurations for different mobility management purposes. In some implementations, the MN 104 can configure the UE to perform intra-frequency measurements or inter-frequency measurements in the first measurement configuration, and configure the UE to perform inter-RAT measurements in the second measurement configuration. In other implementations, the MN 104 can configure the UE to perform intra-frequency measurements in the first measurement configuration, and configure the UE to perform inter-frequency measurements in the second measurement configuration. In yet other implementations, the MN 104 can configure the UE to perform intra-frequency/inter-frequency/inter-RAT measurements in the first and second measurement configurations which configure different measured carrier frequencies or different reporting configurations.

In some implementations, the MN 104 can perform the measurement configuration procedure 472 with the UE 102 via the SN 106A in response to receiving a RAN-CN interface (e.g., S1 or NG) message for the UE 102 from CN 110 (e.g., AMF 164 or MME 114). For example, the RAN-CN interface message can indicate the MN 104 to move the UE 102 to a legacy RAT network for a fallback procedure. The CN 110 indicates a CS fallback to the MN 104 in the RAN-CN interface message (e.g., UE CONTEXT MODIFICATION REQUEST message), so that the MN 104 can configure the UE 102 to measure a GSM or UTRA carrier frequency in the second measurement configuration in response to the indication of CS fallback. In another example, the CN 110 requests to setup resources (e.g., a QoS flow) for an IMS voice call in the RAN-CN interface message (e.g., PDU SESSION RESOURCE MODIFY REQUEST message) and the MN 104 cannot support the IMS voice. Because the MN 104 does not support IMS voice, the MN 104 can configure the UE 102 to perform measurements on an EUTRA carrier frequency in the second measurement configuration in response to the indication of EPS fallback. In yet other implementations, the MN 104 can transmit the second measurement configuration in response to receiving a first UL NAS message or a MN UL RRC message including a second UL NAS message from the UE 120. The second UL NAS message can be the same as or different from the first NAS message. For example, the first UL NAS message can be a *Service Request* message or an *Extended Service Request* message, and the MN UL RRC message can be an *ULInformationTransfer* message. If the MN 104 receives a MN UL RRC message not including a NAS message, the MN 104 may not perform the measurement configuration procedure 472.

In yet other implementations, the MN 104 can perform the measurement configuration procedure 472 with the UE 102 via the SN 106A in response to receiving the *MCG failure information* message. For example, the MN 104 may not find a suitable cell for the UE 102 in the first measurement result(s) in the *MCG failure information* message so that the MN 104 performs the measurement configuration 472.

After receiving the *MCG failure information* message, the UE 102 can transmit 420 a first *Measurement Report* message for the MN 104 to the SN 106A, which in turn sends 422 the first *Measurement Report* message to the MN 104. The events 420 and 422 are collectively referred to in Fig. 4 as a measurement reporting procedure 474.

In some implementation, the UE 102 may perform measurements according to the first or second measurement configuration, obtain second measurement result(s) from the measurements and include the second measurement result(s) in the first *Measurement Report* message. In other implementation, the UE 102 may perform measurements according to the first or second measurement configuration, obtain third measurement result(s) from the measurements and include the third measurement result(s) in a second *Measurement Report* message. The UE 102 then can perform the measurement reporting procedure 474 again to transmit the second *Measurement Report* message to the MN 104. In some implementations, the MN 104 may perform the MCG failure recovery procedure in response to the *MCG failure information* message if the first measurement result(s) indicates a cell is suitable for the UE 102 to recover the MCG failure on the cell. In other implementations, the MN 104 may not perform the MCG failure recovery procedure in response to the *MCG failure information* message if the first measurement result(s) indicates none of cells is suitable for the UE 102 to recover the MCG failure. After receiving second/third the measurement result(s), the MN 104 can perform 424 an MCG failure recovery procedure via the SN 106A with the UE 102 to recover the MCG failure if the second/third measurement result(s) indicates a cell is suitable for the UE 102 to recover the MCG failure on the cell. In some implementations, the UE 102 can start a timer (e.g., T316) in response to the MCG failure. If the timer expires, the UE 102 can perform an RRC connection reestablishment procedure. If the UE 102 recovers the MCG failure in response to the MCG failure recovery procedure, the UE 102 stops the timer.

To perform the MCG failure recovery procedure, the MN 104 can send an MCG failure recovery message to the SN 106A, which in turn transmits the *MCG failure recovery* message to the UE 102. The UE 102 can resume 426 MCG transmissions in response to the MCG failure recovery procedure or according to the *MCG failure recovery* message. After the UE 102 resumes MCG transmissions, the UE 102 refrains from transmitting MN UL RRC messages to the SN 106A. In some implementations, the UE 102 can transmit SN UL RRC messages (e.g., *Measurement Report* messages) to the SN 106A on the SRB3 during the MCG failure.

In some implementations, the *MCG failure recovery* message can be a *MobilityFrom"source RAT"Command* message for inter-RAT handover to a target RAT. The source RAT is different from the target RAT. The MN 104 can prepare handover to a cell of a target RAT for the UE 102 when the first/second/third measurement result(s) indicates the cell is suitable. In the preparation, the MN 104 can obtain a *target handover command* message for handover to the cell of the target RAT from a base station of the target RAT via a RAN interface (e.g., Xn) or a RAN-CN interface (e.g, S1 or NG). Then the MN 104 sends a *MobilityFrom"source RAT"Command* message including the *target handover command* message to the SN 106A, which in turn transmits the *MobilityFrom*"*source RAT"Command* message to the UE 102. After sending the *MobilityFrom"source RAT"Command* message to the SN 106A, the MN 104 can perform a SN Release procedure and/or a Context Release procedure with the SN 106A. In some implementations, the MN 104 can perform a SN Release procedure and/or a Context Release procedure with the SN 106A after a time period after sending the *MobilityFrom"sourceRAT"Command* message to the SN 106A. In other implementations, the MN 104 can perform an SN Release procedure and/or a Context Release procedure with the SN 106A after receiving a RAN interface message (e.g., *RRC Transfer* message) from the SN 106A, which indicates the *MobilityFrom"source RAT"Command* message has been transmitted to the UE 102.

The UE 102 can perform handover to the cell of the target RAT according to the *target handover command* message and transmits a *target handover complete* message on the cell of the target RAT in response to the *target handover command* message.

In some implementations, the source RAT can be EUTRA, and the *MobilityFrom"source RAT"Command* can be a *MobilityFromEUTRACommand* message. If the target RAT is NR, the *target handover command* message and the *target handover complete* message can be a *RRCReconfiguration* message and a *RRCReconfigurationComplete* message, respectively. If the target RAT is UTRA, the *target handover command* message and the *target handover complete* message can be a *HandoverToUTRANCommand* message and a *HandoverToUTRANComplete* message, respectively. If the target RAT is GSM, the *target handover command* message and the *target handover complete* message can be a *Handover Command* message and a *Handover Complete* message, respectively. If one of the source RAT and the target RAT is EUTRA/EPC, the other is EUTRA/5GC, the *target handover command* message and the *target handover complete* message can be an *RRCConnectionReconfiguration* message and an *RRCConnectionReconfigurationComplete* message, respectively.

In other implementations, the source RAT can be NRm and the *MobilityFrom"source RAT"Command* can be a *MobilityFromNRCommand* message. If the target RAT is ETURA, the *target handover command* message and the *target handover complete* message can be a *RRCConnectionReconfiguration* message and a *RRCConnectionReconfigurationComplete* message, respectively. If the target RAT is UTRA, the *target handover command* message and the *target handover complete* message can be a *HandoverToUTRANCommand* message and a *HandoverToUTRANComplete* message, respectively.

If the MN 104 is a master eNB (MeNB) or master ng-eNB (Mng-eNB), the *MCG failure recovery* message can be a *RRCConnectionReconfiguration* message including a *MobilityControlInfo* IE for intra-system handover to a EUTRA cell. In some implementations, the MN 104 can prepare handover to a EUTRA cell for the UE 102 when the first/second/third measurement result(s) indicates the EUTRA cell is suitable. As a part of the preparation, the MN 104 can generate the *RRCConnectionReconfiguration* message, or obtain the *RRCConnectionReconfiguration* message from a target base station (i.e., an eNB or ng-eNB). The MN 104 then transmits the *RRCConnectionReconfiguration* message to the SN 106A, which in turn transmits the *RRCConnectionReconfiguration* message to the UE 102. The UE 102 can resume MCG transmissions on the EUTRA cell after receiving the *RRCConnectionReconfiguration* message. The UE 102 performs handover to the EUTRA cell according to the *RRCConnectionReconfiguration* message and transmits a *RRCConnectionReconfigurationComplete* message on the EUTRA cell in response to the *RRCConnectionReconfiguration* message. After handover to the EUTRA cell, the UE 102 transmits MN UL RRC messages on EUTRA cell instead of to the SN 106A.

In some implementations, the MN 104 or the target base station can indicate release of the SN 106A in the *RRCConnectionReconfiguration* message. After sending the *RRCConnectionReconfiguration* message to the SN 106A, the MN 104 can perform an SN Release procedure and/or a Context Release procedure with the SN 106A. In some implementations, the MN 104 can perform an SN Release procedure and/or a Context Release procedure with the SN 106A after a time period after sending the *RRCConnectionReconfiguration* message to the SN 106A. In other implementations, the MN 104 can perform an SN Release procedure and/or a Context Release procedure with the SN 106A after receiving a RAN interface message (e.g., *RRC Transfer* message) from the SN 106A, which indicates the *RRCConnectionReconfiguration* message has been transmitted to the UE 102.

If the MN 104 is a master eNB (MeNB) or master ng-eNB (Mng-eNB), the *MCG failure recovery* message can be a *RRCConnectionRelease* message redirecting the UE 102 to an EUTRA cell or a target RAT cell. In the *RRCConnectionRelease* message, the MN 104 can instruct the UE 102 to enter an idle state or inactive state, and redirect the UE 102 to a particular cell and/or a particular carrier frequency. The MN 104 can determine the particular cell and/or particular carrier frequency according to the first/second/third measurement result(s). The particular carrier frequency can be an EUTRA, NR, UTRA or GSM carrier frequency which can be indicated in the second/third measurement result(s). The particular cell can be a NR cell, EUTRA cell, UTRA cell or GSM cell which can be indicated in the second/third measurement result(s). The UE 102 transitions to the idle or inactive state and select the particular cell or a particular cell on the particular carrier frequency according to the *RRCConnectionRelease* message.

If the MN 104 is a master gNB (MgNB), the *MCG failure recovery* message can be a *RRCReconfiguration* message including a *ReconfigurationWithSync* IE for handover to a NR cell. In some implementations, the MgNB 104 can prepare handover to an NR cell for the UE 102 when the first/second/third measurement result(s) indicates the NR cell is suitable. In the preparation, the MgNB 104 can generate the *RRCReconfiguration* message, or obtain the *RRCReconfiguration* message from a target gNB. The MgNB 104 then transmits the *RRCReconfiguration* message to the SN 106A, which in turn transmits the *RRCReconfiguration* message to the UE 102. The UE 102 can resume MCG transmissions on the NR cell after receiving the *RRCReconfiguration* message. The UE 102 performs handover to the NR cell according to the *RRCReconfiguration* message and transmits a *RRCReconfigurationComplete* message on the NR cell in response to the *RRCReconfiguration* message. After handover to the NR cell, the UE 102 transmits MN UL RRC messages on NR cell instead of to the SN 106A.

In some implementations, the MgNB 104 or the target gNB can indicate release of the SN 106A in the *RRCReconfiguration* message. After sending the *RRCReconfiguration* message to the SN 106A, the MN 104 can perform an SN Release procedure and/or a Context Release procedure with the SN 106A. In some implementations, the MgNB 104 can perform an SN Release procedure and/or a Context Release procedure with the SN 106A after a time period after sending the *RRCReconfiguration* message to the SN 106A. In other implementations, the MgNB 104 can perform an SN Release procedure and/or a Context Release procedure with the SN 106A after receiving a RAN interface message (e.g., *RRC Transfer* message) from the SN 106A, which indicates the *RRCReconfiguration* message has been transmitted to the UE 102.

If the MN 104 is an MgNB, the *MCG failure recovery* message can be a *RRCRelease* message redirecting the UE 102 to an NR cell or a target RAT cell. In the *RRCRelease* message, the MgNB 104 can instruct the UE 102 to enter an idle state or inactive state, and redirect the UE 102 to a particular cell and/or a particular carrier frequency. The MgNB 104 can determine the particular cell and/or particular carrier frequency according to the first/second/third measurement result(s). The particular carrier frequency can be a EUTRA, NR, or UTRA carrier frequency which can be indicated in the first/second/third measurement result(s). The particular cell can be an NR cell, EUTRA cell, or UTRA cell which the second/third measurement result(s) can indicate. The UE 102 transitions to the idle or inactive state and select the particular cell or a particular cell on the particular carrier frequency according to the *RRCRelease* message.

In some implementations, during the MCG failure, the UE 102 can transmit MN UL RRC messages (e.g., the *MCG failure information* message, the *RRC reconfiguration complete* message(s) and/or the *Measurement Report* message(s)) on a SCG link (i.e., SCG radio resources or SN radio resources) of a split SRB1 to the SN 106A. For each of the MN UL RRC messages, the SN 106A can send a RAN interface message including the MN UL RRC message to the MN 104. For example, the RAN interface message can be an *RRC Transfer* message and the SN 106A can include the MN UL RRC message in a *UE Report* IE or a *Split SRB* IE in the *RRC Transfer* message. In one implementation, the UE 102 can set a primary path of the split SRB1 from "MCG" to "SCG" in response to the MCG failure. The UE 102 can set the primary path of the split SRB1 from "SCG" to "MCG" in response to an MCG fast recovery procedure like the MCG fast recovery procedure 424. In other implementations, during the MCG failure, the UE 102 can transmit MN UL RRC messages (e.g., the *MCG failure information* message, the *RRC reconfiguration complete* message(s) and/or the *Measurement Report* message(s)) on SRB3 to the SN 106A. In one implementation, the UE 102 can include the MN UL RRC message in a SN UL RRC message (e.g., *UEInformationTransferMRDC* message) and transmits the SN UL RRC message to the SN 106A on SRB3. The SN 106A extracts the MN UL RRC message from the SN UL RRC message. For each of the MN UL RRC messages, the SN 106A can send a RAN interface message including the MN UL RRC message to the MN 104. For example, the RAN interface message can be an *RRC Transfer* message and the SN 106A can include the MN UL RRC message in a *Fast MCG Recovery via SRB3 from SN to MN* IE in the *RRC Transfer* message.

In some implementations, during the MCG failure, the MN 104 can send each of MN DL RRC messages (e.g., the *RRC reconfiguration* message(s) and/or the *MCG fast recovery message*) to the SN 106A, which in turn transmits the MN DL RRC message on an SCG link (i.e., SCG radio resources or SN radio resources) of the split SRB1 to the UE 102. For each of the MN DL RRC messages, the MN 104 can send a RAN interface message including the MN DL RRC message to the SN 106A. For example, the RAN interface message can be an *RRC Transfer* message and the MN 104 can include the MN DL RRC message in a *Split SRB* IE in the *RRC Transfer* message. In other implementations, during the MCG failure, for each of the MN DL RRC messages, the MN 104 can send a RAN interface message including the MN DL RRC message to the SN 106A, which in turn transmits the MN DL RRC message on SRB3 to the UE 102. For example, the RAN interface message can be an *RRC Transfer* message and the MN 104 can include the MN DL RRC message in a *Fast MCG Recovery via SRB3 from MN to SN* IE in the *RRC Transfer* message. In one implementation, the SN 106A can include the MN DL RRC message in a SN DL RRC message (e.g., *DLInformationTransferMRDC* message) and transmits the SN DL RRC message to the UE 102 on SRB3. The UE 102 extracts the MN DL RRC message from the SN DL RRC message.

In some implementations not covered by the claims, if the UE 102 initiates a NAS procedure during the MCG failure (i.e., similar to the event 306 before the MCG failure recovery procedure), the UE 102 can perform a UL NAS transmission procedure similar to the UL NAS transmission procedure 350 to transmit a UL NAS message of the NAS procedure to the MN 104. According to the invention, the UE 102 initiates a NAS procedure during the MCG failure (i.e., similar to the event 306 before the MCG failure recovery procedure), the UE 102 does not perform a UL NAS transmission procedure similar to the UL NAS transmission procedure 350. The UE 102 refrains from transmitting a UL NAS message of the NAS procedure during the MCG failure. The UE 102 transmits the UL NAS message after the UE 102 recovers the MCG failure by the MCG failure recovery procedure 424. More specifically, if/after the UE 102 handovers or redirects to a cell (e.g., cell 122 or 124) of the MN 104 in response to the MCG failure recovery procedure, the UE 102 can transmit the UL NAS message to the MN 104 on the cell. If/after the UE 102 hands over or redirects to a cell (e.g., cell 122 or 124) of a target base station in response to the MCG failure recovery procedure and the target base station and the MN 104 are the same type (i.e., eNB, ng-eNB or gNB), the UE 102 can transmit the UL NAS message to the target base station on the cell. Otherwise, according to some implementations not covered by the claims, the UE 102 can abort the NAS procedure or abort transmission of the UL NAS message. In some implementations, if the UE 102 cannot transmit a UL NAS message during the MCG failure, an RRC layer of the UE 102 can inform upper layer(s) (e.g., EMM layer, 5GMM layer, ESM layer ,and/or 5GSM layer) of the failure to deliver the UL NAS message. The upper layer(s) can resubmit the UL NAS message to the RRC layer after a time duration for transmission.

In some implementations not covered by the claims, if the MN 104 receives a DL NAS message for the UE 102 during the MCG failure (i.e., similar to the event 306 before the MCG failure recovery procedure), the MN 104 can perform a DL NAS transmission procedure similar to the DL NAS transmission procedure 360 to transmit a DL NAS message of the NAS procedure to the UE 102. According to the invention, if the MN 104 receives a DL NAS message for the UE 102 during the MCG failure (i.e., similar to the event 306 before the MCG failure recovery procedure), the MN 104 does not perform a DL NAS transmission procedure similar to the DL NAS transmission procedure 360. According to the invention, the MN 104 refrains from transmitting the DL NAS message while the MCG failure condition persists. The MN 104 transmits the DL NAS message after the MN 104 recovers the MCG failure by the MCG failure recovery procedure 424. More specifically, if/after the UE 102 handovers or redirects to a cell (e.g., cell 122 or 124) of the MN 104 in response to the MCG failure recovery procedure, the MN 104 can transmit the DL NAS message to the MN 104 on the cell. Otherwise (e.g., the MN 104 determines to handover or redirect the UE 102 to a cell (e.g., cell 122 or 124) of a target base station), in an implementation not covered by the claims the MN 104 can abort or suspend transmission of the DL NAS message and/or discard the DL NAS message. In the abortion or discarding case, the MN 104 can send a RAN-CN interface message (e.g., *NAS NON DELIVERY INDICATION* message) to indicate to the CN 110 that the MN 104 fails or has not started to transmit the DL NAS message to the UE 102. In another implementation not covered by the claims, if the MN 104 receives a DL NAS message during the MCG failure (i.e., similar to the event 306 before the MCG failure recovery procedure), the MN 104 can abort or suspend transmission of the DL NAS message and/or discard the DL NAS message. In this implementation, the MN 104 can send a RAN-CN interface message (e.g., *NAS NON DELIVERY INDICATION* message) to indicate to the CN 110 that the MN 104 fails or has not started to transmit the DL NAS message to the UE 102.

In some implementations not covered by the claims, if the UE 102 has a UL NAS message for transmission when the UE 102 determines 404 MCG failure, the UE 102 can include the UL NAS message in the *MCG failure information* message. In other implementations not covered by the claims, if the UE 102 has a UL NAS message to be transmitted during the MCG failure, the UE 102 can include the UL NAS message in the *RRC reconfiguration complete* message 416, the *Measurement Report* message 420 or an MCG failure recovery complete message (e.g., *RRCReconfigurationComplete* message or *RRCConnectionReconfigurationComplete* message) of the MCG failure recovery procedure 424 in response to the MCG failure recovery message. When the MN 104 receives the UL NAS message from the UE 102, the MN 104 can forward the UL NAS message to the CN 110 as event 312. In some implementations not covered by the claims, if the MN 104 receives a DL NAS message from the CN 110 during the MCG failure, the MN 104 can include the DL NAS message in the *RRC reconfiguration* message 412 or the MCG failure recovery message of the MCG failure recovery procedure 424. Thus, the UE 102 can receive DL NAS message upon receiving the RRC reconfiguration message 412 or the MCG failure recovery message.

In some implementation, if the SN 106A is a gNB, the *RRC reconfiguration* message and the *RRC reconfiguration complete* message can be an *RRCReconfiguration* message and an *RRCReconfigurationComplete* message, respectively. In other implementations, if the SN 106A is an eNB or an ng-eNB, the *RRC reconfiguration* message and the *RRC reconfiguration complete* message can be an *RRCConnectionReconfiguration* message and an *RRCConnectionReconfigurationComplete* message, respectively.

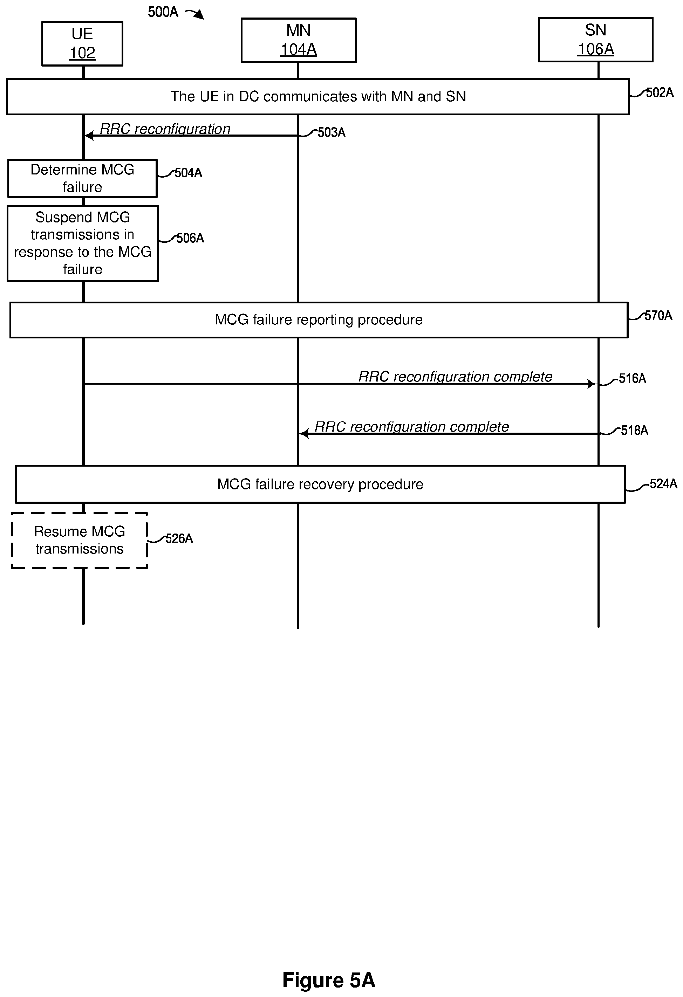

Next referring to Fig. 5A, a scenario 500A also involves an MCG fast recovery procedure. In this scenario, the base station 104 operates as a MN and the base station 106A operates as a SN. Events 502A, 504A, 506A, 570A, 516A, 518A, 524A and 526A are similar to events 402, 404, 406, 470, 416, 418, 424 and 426. The differences between Fig. 5A and Fig. 4 are described below.

The MN 104 generates an *RRC reconfiguration* message (i.e., a MN RRC message) including a configuration for the UE 102. Then the MN 104 transmits 503A the *RRC reconfiguration* message to the UE 102 while the UE is in DC with the MN 104 and the SN 106A. While the UE 102 receives 503A the *RRC reconfiguration* message, the UE 102 determines 504A MCG failure. The UE 102 suspends 506A MCG transmissions in response to the MCG failure, so that the UE 102 is unable to transmit an *RRC reconfiguration complete* message to the MN 104 by using MCG radio resources in response to the *RRC reconfiguration* message. Instead, the UE 102 transmits 516A the RRC reconfiguration complete message to the SN 106A, which in turn sends 518A the *RRC reconfiguration complete* message to the MN 104. Upon receiving the RRC reconfiguration complete message, the MN 104 can determine that the UE 102 has received the RRC reconfiguration message 503A and applies the configuration. Thus, inconsistency of configurations between the UE 102 and the MN 104 can be avoided. In some implementations, the UE 102 can transmit the RRC reconfiguration complete message 516A after transmitting the MCG failure information message. In other implementations, the UE 102 can transmit the *RRC reconfiguration complete* message 516A before transmitting the MCG failure information message.

In some implementations, if the MN 104 is a gNB, the *RRC reconfiguration* message and the *RRC reconfiguration complete* message can be an *RRCReconfiguration* message and an *RRCReconfigurationComplete* message, respectively. In other implementations, if the MN 104 is an eNB or ng-eNB, the *RRC reconfiguraiton* message and the *RRC reconfiguration complete* message can be an *RRCConnectionReconfiguration* message and an *RRCConnectionReconfigurationComplete* message, respectively.

In some implementations, the UE 102 can include an indication in the MCG failure information message to indicate to the MN 104 that the UE 102 receives the *RRC reconfiguration* message. In such implementations, the UE 102 does not transmit the RRC reconfiguration message 516A.

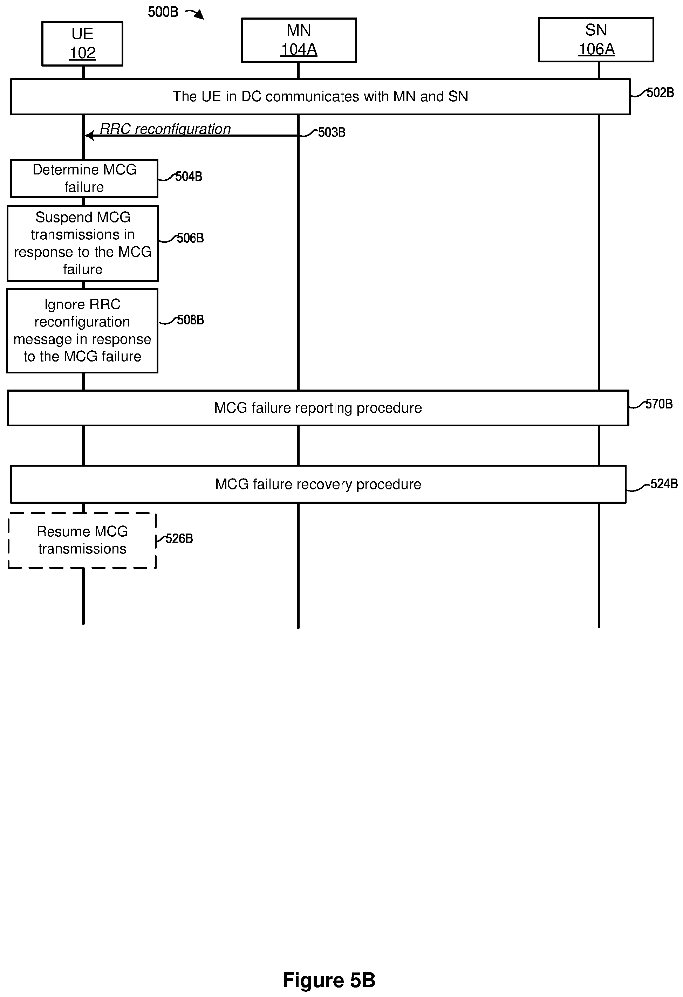

Next referring to Fig. 5B, a scenario 500B involves an MCG fast recovery procedure, similar to Fig. 5A. In this scenario, the base station 104 operates as a MN and the base station 106A operates as a SN. Events 502B, 504B, 506B, 570B, 524B and 526B are similar to events 402, 404, 406, 470, 416, 418, 424 and 426. The differences among Fig. 5B, Fig. 5A and Fig. 4 are described below.

The MN 104 generates an *RRC reconfiguration* message (i.e., a MN RRC message) including a first configuration for the UE 102. The MN 104 then transmits 503B the *RRC reconfiguration* message to the UE 102, while the UE is in DC with the MN 104 and the SN 106A. While the UE 102 receives 503B the *RRC reconfiguration* message, the UE 102 determines 504B MCG failure. The UE 102 suspends 506B MCG transmissions and ignores (or discards) 508B the *RRC reconfiguration* message in response to the MCG failure. That is, the UE 102 does not apply the first configuration in the *RRC reconfiguration* message. Event 506B can occur before or after event 508B. Upon receiving the *MCG failure information* message from the UE 102 via the SN 106A, the MN 104 can determine that the UE 102 has not applied he first configuration in the *RRC reconfiguration* message. Thus, inconsistency of configurations between the UE 102 and the MN 104 can be avoided.

In some implementations, the MN 104 can transmit another *RRC reconfiguration* message (a second *RRC reconfiguration* message) including the first configuration to the UE 102 via the SN 106A during the MCG failure and the UE 102 transmits another *RRC reconfiguration complete* message (a second *RRC reconfiguration complete* message) to the MN 104 via the SN in response to the second *RRC reconfiguration* message, similar to events 412, 414, 416 and 418. In other implementations, the MN 104 can include the first configuration in the MCG fast recovery message in the MCG fast recovery procedure 524. In yet another implementation, the MN 104 can transmit a third *RRC reconfiguration* message including the first configuration to the UE 102 by using MCG radio resources after MCG fast recovery procedure 524 and the UE 102 transmits a third *RRC reconfiguration complete* message to the MN 104 by using MCG radio resources in response to the third *RRC reconfiguration complete* message.

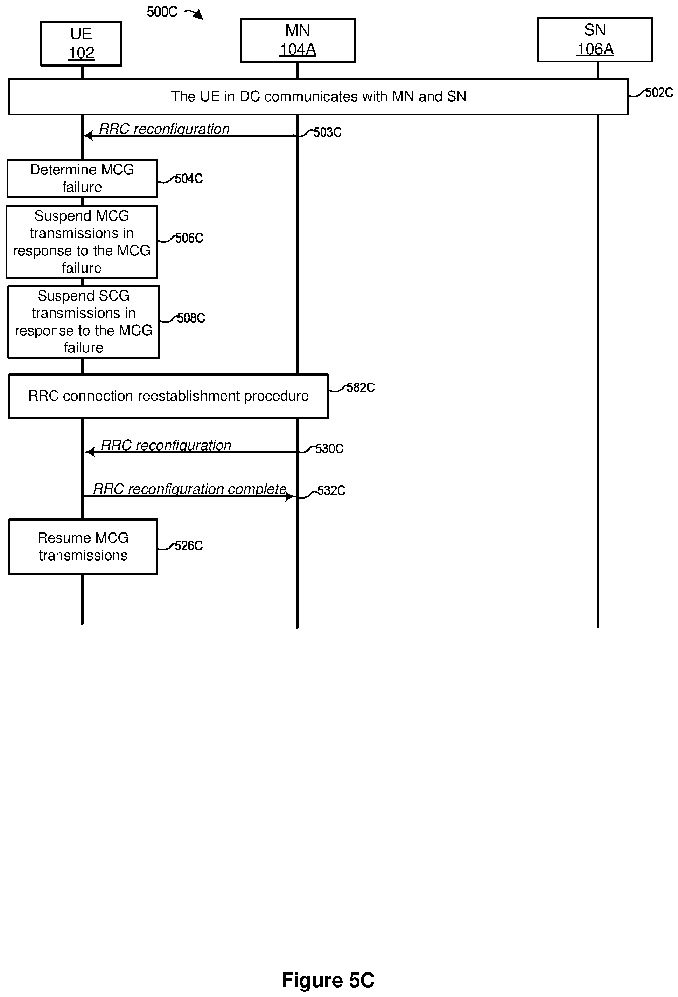

Next referring to Fig. 5C, a scenario 500C involves an MCG fast recovery procedure, similar to Fig. 5A. In this scenario, the base station 104 operates as an MN, and the base station 106A operates as a SN. Events 502C, 504C and 506C are similar to events 402A, 404A and 406A. The differences among Fig. 5C, Fig. 5A and Fig. 4 are described below.

The MN 104 generates an *RRC reconfiguration* message (i.e., a MN RRC message) including a first configuration for the UE 102. Then the MN 104 transmits 503B the *RRC reconfiguration* message to the UE 102 while the UE is in DC with the MN 104 and the SN 106A. When the UE 102 receives 503C the *RRC reconfiguration* message, the UE 102 determines 504C MCG failure. The UE 102 suspends 506C MCG transmissions in response to the MCG failure. The UE 102 also suspends 508C SCG transmissions in response to the MCG failure even though the UE 102 enables an MCG fast recovery function. In addition, the UE 102 can perform 582C an RRC connection reestablishment procedure with the MN 104 in response to the MCG failure even though the UE 102 enables an MCG fast recovery function. The UE 102 can release the connection with the SN 106A in response to performing the RRC connection reestablishment procedure. To perform RRC connection reestablishment procedure, the UE 102 performs a random access procedure with the MN 104 and transmits a *RRC reestablishment request* message to the MN 104 during the random access procedure. The UE 102 then can receive an *RRC reestablishment* message from the MN 104 in response to the *RRC reestablishment request* message so that the UE 102 recover the MCG failure according to the *RRC reestablishment* message. The UE 102 resume MCG transmissions for SRB1 and transmits an *RRC reestablishment complete* message to the MN 104 via the SRB1 in response to the *RRC reestablishment* message. To perform the RRC reestablishment procedure, the UE 102 can apply certain default configurations (e.g., as specified by 3GPP TS 36.331 or 38.331), so that the MN 104 can use the default configurations to communicate with the UE 102 after the RRC connection reestablishment procedure. The MN 104 can transmit 530C the *RRC reconfiguration* message with the UE 102 after transmitting the *RRC reestablishment* message. In response, the UE 102 transmits 532C an *RRC reconfiguration complete* message to the MN 104. The MN 104 can include multiple configurations in the *RRC reconfiguration* message 530C. For example, the MN 104 can include the first configuration in the *RRC reconfiguration* message 530C. In another example, the MN 104 can indicate releasing the first configuration in the *RRC reconfiguration* message 530C if the UE 102 does not release the first configuration due to applying the default configurations. In yet another example, the MN 104 can include a complete configuration with a full configuration indicator in the *RRC reconfiguration* message 530C. Thus, inconsistency of configurations between the UE 102 and the MN 104 can be avoided. The UE 102 can resume MCG transmissions for SRB2 and DRB(s) in response to the *RRC reconfiguration* message 530C.

In some implementations, the UE 102 can perform 582C an RRC connection reestablishment procedure with the base station 106B, which is similar to the RRC connection reestablishment procedure 582C. The base station 106B then can transmit an *RRC reconfiguration* message to the UE 102 after transmitting the *RRC reestablishment* message and receives an *RRC reconfiguration complete* message from the UE 102, similar to events 530C and 532C.

In some implementation, if the MN 104 is a gNB, the *RRC reestablishment request* message, the *RRC reestablishment* message and the *RRC reconfiguration complete* message can be an *RRCReestablishmentRequest* message, an *RRCReestablishment* message and an *RRCReestablishmentComplete* message, respectively. In other implementations, if the MN 104 is an eNB or ng-eNB, the *RRC reestablishment request* message, the *RRC reestablishment* message and the *RRC reconfiguration complete* message can be an *RRCConnectionReestablishmentRequest* message, an *RRCConnectionReestablishment* message and an *RRCConnectionReestablishmentComplete* message, respectively.

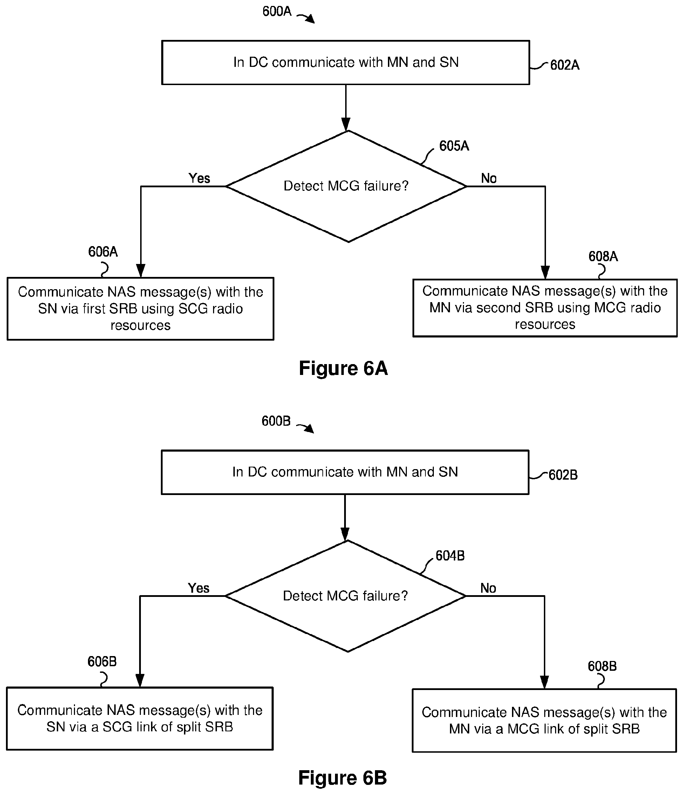

Next, several example methods the UE can implement to determine which SRB is used to communicate NAS messages or measurement report messages depending on whether MCG failure occurs, are discussed with reference to Figs. 6A-11.

Referring first to Fig. 6A, an example method 600A for managing communication of NAS message(s) can be implemented in the UE 102 of Fig. 1A for example. The method 600A begins at block 602A, where the UE 102 is in DC with a MN and a SN (event 302). The UE 102 at block 604A determines whether MCG failure has occurred. If the UE 102 determines MCG failure has occurred (event 304), the UE 102 at block 606A communicates NAS message(s) with the SN via a first SRB by using SCG radio resources (event 308). On the other hand, if the UE 102 determines that the MCG failure has not occurred, the UE 102 at block 608A communicates NAS message(s) with the MN via a second SRB by using MCG radio resources. In some implementations, the first SRB is SRB3 and the second SRB is SRB2.

Fig. 6B is a flow diagram of an example method 600B that begins at block 602B, where the UE 102 is in DC with a MN and a SN (event 302). The UE 102 at block 604B determines whether MCG failure has occurred. If the UE 102 determines MCG failure has occurred (event 304), the UE 102 at block 606B communicates NAS message(s) with the SN via a SCG link of a split SRB (event 308). On the other hand, if the UE 102 determines that the MCG failure has not occurred, the UE 102 at block 608B communicates NAS message(s) with the MN via an MCG link of the split SRB. In some implementations, the split SRB is a split SRB2. In other implementations, the split SRB is a split SRB1.

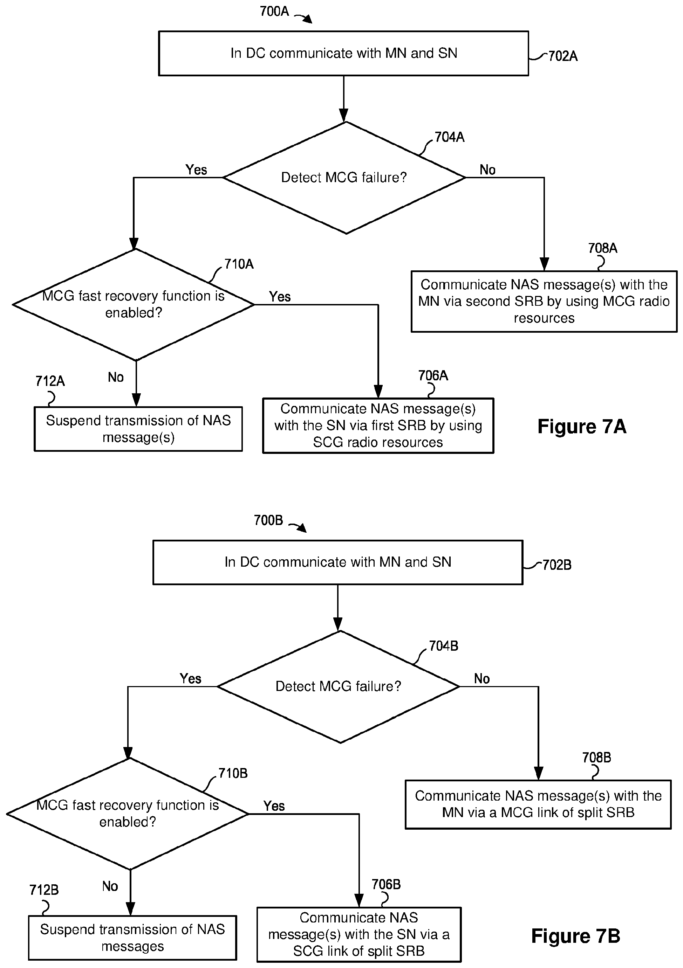

Fig. 7A is a flow diagram of an example method 700A that begins at block 702A, where the UE 102 is in DC with a MN and a SN (event 302). The UE 102 at block 704A determines whether MCG failure has occurred. If the UE 102 determines that the MCG failure has not occurred, the UE 102 at block 708A communicates NAS message(s) with the MN via a second SRB by using MCG radio resources. On the other hand, if the UE 102 determines MCG failure has occurred (event 304), the UE 102 at block 710A determines whether MCG fast recovery function is enabled. If the UE 102 determines the MCG fast recovery function is enabled, the UE 102 at block 706A communicates NAS message(s) with the SN via a first SRB by using SCG radio resources (event 308). If the UE 102 determines the MCG fast recovery function is disabled, the UE 102 at block 712A suspends transmission of NAS message(s). In some implementations, the first SRB is SRB3, and the second SRB is SRB2.

Fig. 7B is a flow diagram of an example method 800A that begins at block 702B, where the UE 102 is in DC with a MN and a SN (event 302). The UE 102 at block 704B determines whether MCG failure has occurred. If the UE 102 determines that the MCG failure has not occurred, the UE 102 at block 708B communicates NAS message(s) with the MN via an MCG link of a split SRB. On the other hand, if the UE 102 determines MCG failure has occurred (event 304), the UE 102 at block 710B determines whether MCG fast recovery function is enabled. If the UE 102 determines the MCG fast recovery function is enabled, the UE 102 at block 706B communicates NAS message(s) with the SN via a SCG link of a split SRB (event 308). If the UE 102 determines the MCG fast recovery function is disabled, the UE 102 at block 712B suspends transmission of NAS message(s). In some implementations, the first SRB is SRB3, and the second SRB is SRB2.

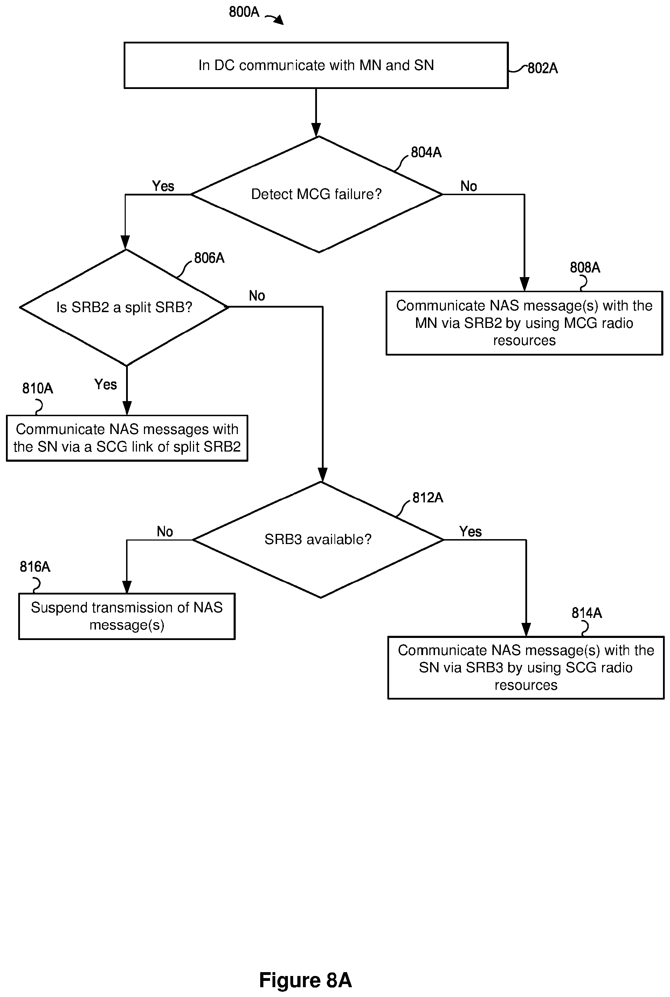

Fig. 8A is a flow diagram of an example method 800A that begins at block 802A, where the UE 102 is in DC with a MN and a SN (event 302). The UE 102 at block 804A determines whether MCG failure has occurred. If the UE 102 determines that the MCG failure has not occurred, the UE 102 at block 808A communicates NAS message(s) with the MN via SRB2 by using MCG radio resources. On the other hand, if the UE 102 determines MCG failure has occurred (event 304), the UE 102 at block 806A determines whether SRB2 is a split SRB. If the UE 102 determines that the SRB2 is a split SRB, the UE 102 at block 810A communicates NAS message(s) with the SN via a SCG link of the split SRB2 (event 308). If the UE 102 determines that the SRB2 is not a split SRB, the UE 102 at block 812A determines whether SRB3 is available. If the UE 102 determines the SRB3 is available, the UE 102 at block 814A communicates NAS message(s) with the SN via the SRB3 using SCG radio resources (event 308). If the UE 102 determines the SRB3 is not available, the UE 102 at block 816A suspends transmission of NAS message(s).

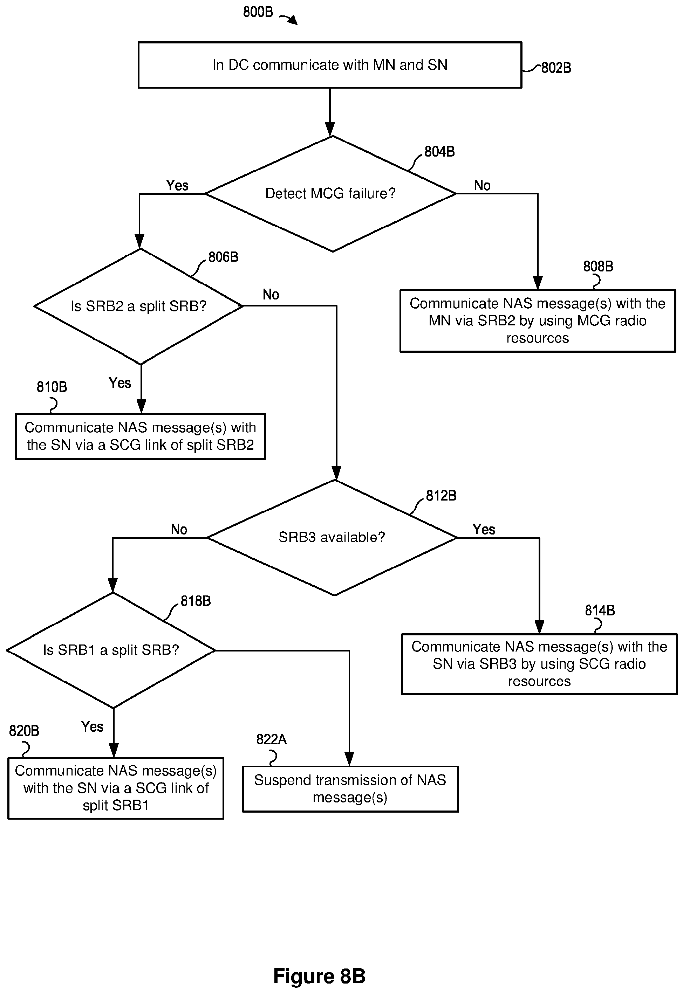

Fig. 8B is a flow diagram of an example method 800B which is similar to Fig. 8A. Blocks in this example method similar to those discussed in Fig. 8A are labeled with same references numbers. The differences between the scenarios of Fig. 8A and Fig. 8B are discussed below. If the UE 102 determines the SRB3 is not available, the UE 102 at block 818B determines whether SRB1 is a split SRB. If the UE 102 determines the SRB1 is a split SRB, the UE 102 at block 820B communicates NAS message(s) with the SN via a SCG link of the split SRB1 (event 308). If the UE 102 determines the SRB1 is not a split SRB, the UE 102 at block 822B suspends transmission of NAS message(s).

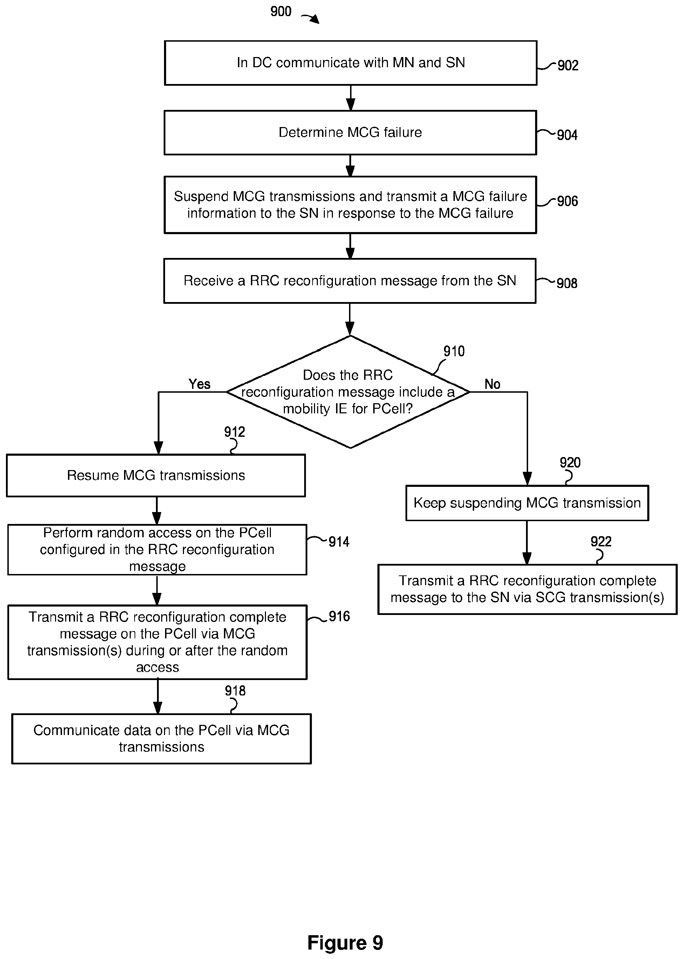

Now referring to Fig. 9, an example method 900 for handling MCG transmissions can be implemented in the UE 102 of Fig. 1A for example. The method 900 begins at block 902, where the UE 102 is in DC with a MN and a SN (event 402). The UE 102 at block 904 determines MCG failure has occurred (event 404). The UE 102 at block 906 suspends MCG transmissions and transmits an MCG failure information message to the SN in response to the MCG failure (events 406 and 408). After transmitting the MCG failure information, the UE 102 at block 908 receives an *RRC reconfiguration* message from the SN (event 412). The UE 102 at block 910 determines whether the *RRC reconfiguration* message includes a mobility IE for a PCell. If the UE 102 determines the *RRC reconfiguration* message includes a mobility IE for a PCell, the UE 102 at block 912 resumes MCG transmissions and at block 914 performs random access on the PCell. The UE 102 at block 916 transmits an *RRC reconfiguration complete message* on the PCell via MCG transmission(s) during or after the random access. After transmitting the *RRC reconfiguration complete* message, the UE 102 at block 918 communicate data on the PCell via MCG transmissions. On the other hand, if the UE 102 determines the *RRC reconfiguration* message does not include a mobility IE for a PCell, the UE 102 at block 920 keeps suspending MCG transmissions and at block 922 transmits an *RRC reconfiguration complete* message to the SN via SCG transmission(s). In some implementations, the mobility IE can be a *MobilityControlInfo* IE or a *ReconfigurationWithSync* IE.

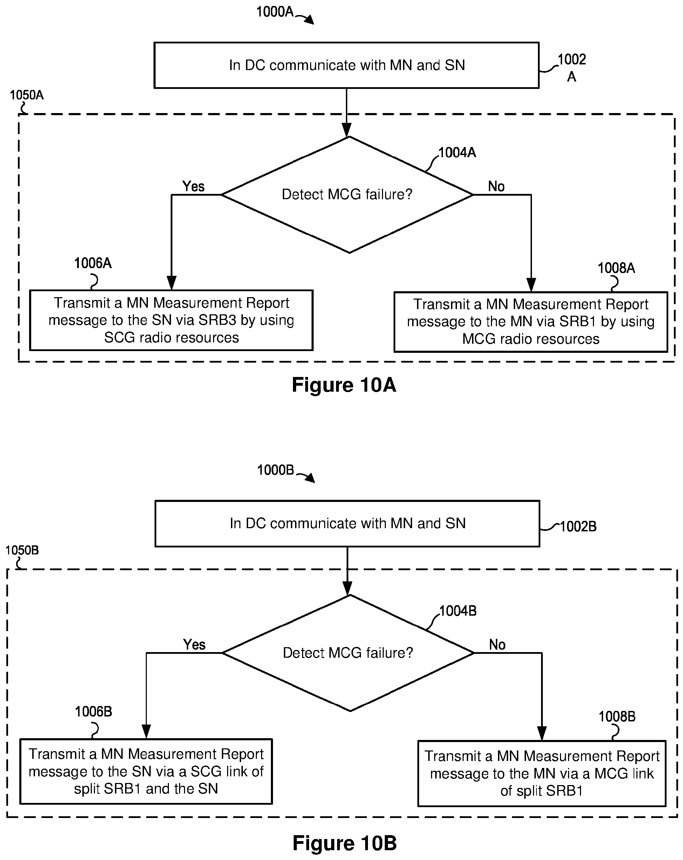

Referring next to Fig. 10A, an example method 1000A for handling transmission of a MN *Measurement Report* message (i.e., a *Measurement Report* message for the MN) can be implemented in the UE 102 of Fig. 1A for example. The method 1000A begins at block 1002A, where the UE 102 is in DC with a MN and a SN (event 402). The UE 102 at block 1004A determines whether MCG failure has occurred. If the UE 102 determines that MCG failure has occurred (event 404), the UE 102 at block 1006A transmits a MN *Measurement Report* message to the SN via SRB3 by using SCG radio resources (event 420). On the other hand, if the UE 102 determines that the MCG failure has not occurred, the UE 102 at block 1006A transmits a MN *Measurement Report* message to the MN via SRB1 using MCG radio resources. Blocks 1004A, 1006A and 1008A are collectively referred to in Fig. 10A as block 1050A.

Fig. 10B is a flow diagram of an example method 1000B that begins at block 1002B, where the UE 102 is in DC with a MN and a SN (event 402). The UE 102 at block 1004B determines whether MCG failure has occurred. If the UE 102 determines MCG failure has occurred (event 404), the UE 102 at block 1006B transmits a MN *Measurement Report* message to the SN via a SCG link of a split SRB1 (event 308). On the other hand, if the UE 102 determines that the MCG failure has not occurred, the UE 102 at block 1008B transmits a MN *Measurement Report* message to the MN via an MCG link of the split SRB1. Blocks 1004B, 1006B and 1008B are collectively referred to in Fig. 10B as block 1050B.

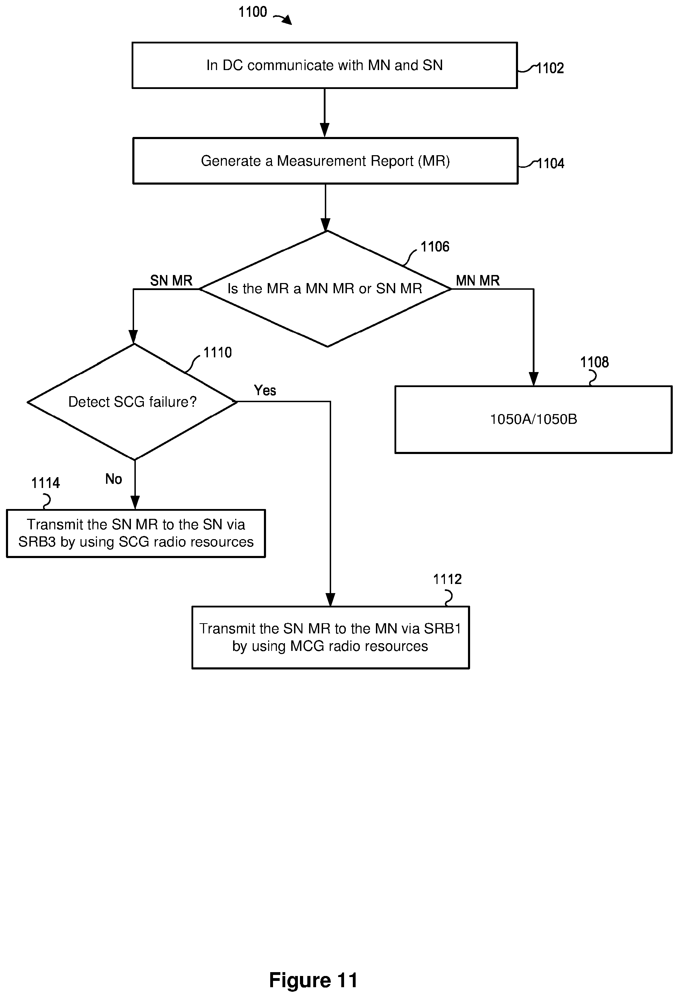

Fig. 11 is a flow diagram of an example method 1100 that begins at block 1102, where the UE 102 is in DC with a MN and a SN (event 402). The UE 102 in DC at block 1104 generates a *Measurement Report* message. The UE 102 at block 1006B determines whether the *Measurement Report* message is a MN *Measurement Report* message or a SN *Measurement Report* message (i.e., the UE 102 transmits the SN *Measurement Report* message due to a measurement configuration configured by the SN). In case of the MN *Measurement Report* message, the UE 102 performs block 1050A or 1050B. In case of the SN *Measurement Report* message, the UE 102 at block 1010 determines whether SCG failure has occurred. If the UE 102 determines that SCG failure has occurred, the UE 102 at block 1112 transmits the SN *Measurement Report* message to the SN via SRB1 by using MCG radio resources. On the other hand, if the UE 102 determines that SCG failure has not occurred, the UE 102 at block 1114 transmits the SN *Measurement Report* message to the MN via SRB 1 by using MCG radio resources.

In some implementations, the UE 102 can determine the SCG failure on a SCG link with the SN. The SCG failure can be a radio link failure, SCG configuration failure or SRB3 integrity failure, reconfiguration with sync failure of the SCG or PSCell change failure.

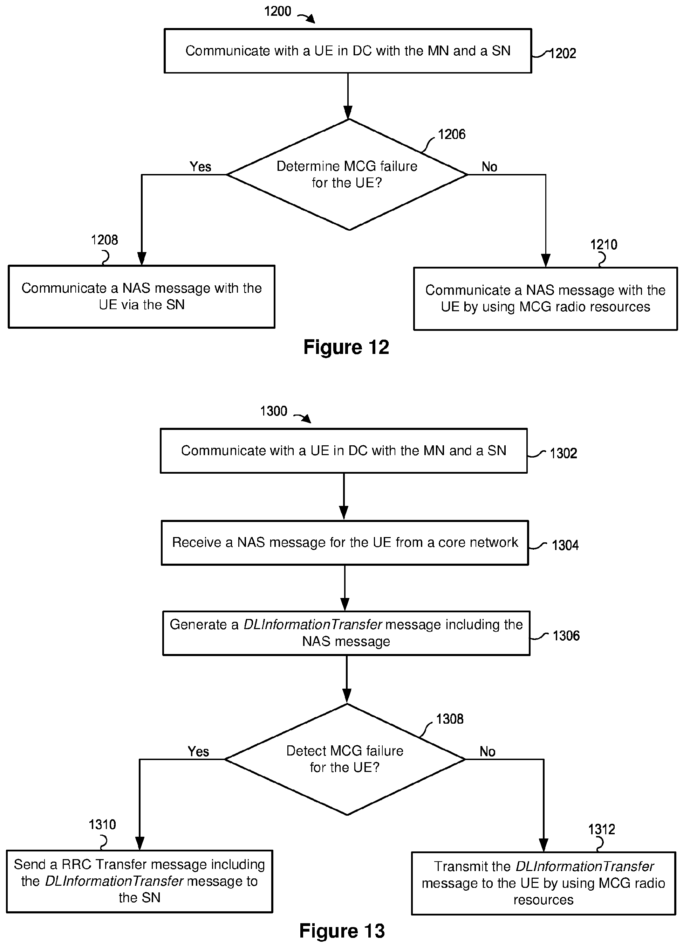

Now referring to Fig. 12, an example method 1200 for managing communication of NAS message(s) can be implemented in the MN 104 of Fig. 1A for example. The method 1200 begins at block 1202, where the MN 104 communicates with a UE in DC with the MN 104 and a SN (event 302). The MN 104 at block 1204 determines whether MCG failure has occurred for the UE. If the MN 104 determines MCG failure occurs (event 314), the MN 104 at block 1206 communicates NAS message(s) with the UE via the SN (event 318). On the other hand, if the MN 104 determines that the MCG failure has not occurred, the UE 102 at block 1208 communicates NAS message(s) with the UE by using MCG radio resources.

Fig. 13 is a flow diagram of an example method 1300 that begins at block 1302, where the MN 104 communicates with a UE in DC with the MN 104 and a SN (event 302). The MN 104 at block 1304 receives a NAS message for the UE in DC from a core network (event 316). The MN 104 at block 1306 generates a *DLInformationTransfer* message including the NAS message. The MN 104 at block 1308 determines whether MCG failure has occurred for the UE. If the MN 104 determines MCG failure has occurred (event 314), the MN 104 at block 1310 sends an *RRC Transfer* message including the *DLInformationTransfer* message to the SN. If the MN 104 determines MCG failure has not occurred, the MN 104 at block 1312 sends the *DLInformationTransfer* message to the UE using MCG radio resources.

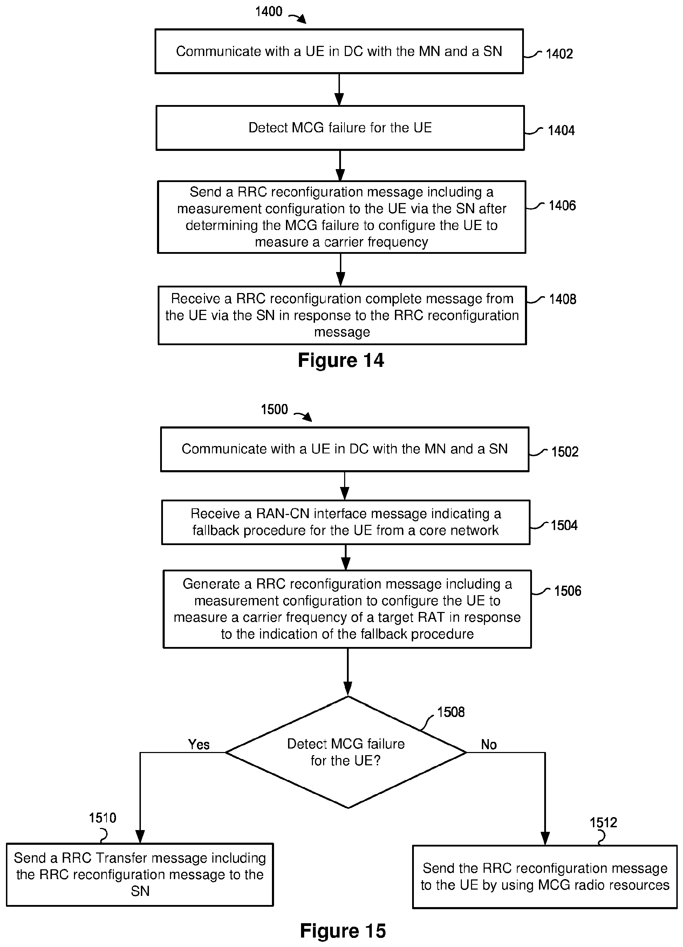

Referring next to Fig. 14, an example method 1400 for configuring a measurement configuration during MCG failure can be implemented in the MN 104 of Fig. 1A for example. The method 1400 begins at block 1402, where the MN 104 communicates with a UE in DC with the MN 104 and a SN (event 402). The MN 104 at block 1404 determines whether MCG failure has occurred for the UE (event 410). After the MN 104 determines that MCG failure has occurred for the UE, the MN 104 at block 1406 sends an *RRC reconfiguration* message including a measurement configuration to the UE via the SN (events 412, 414). The MN 104 at block 1408 receives an *RRC reconfiguration complete* message from the UE via the SN in response to the *RRC reconfiguration* message (events 416, 418).

Fig. 15 is a flow diagram of an example method 1500 that begins at block 1502, where the MN 104 communicates with a UE in DC with the MN 104 and a SN (events 302, 402). The MN 104 at block 1504 receives a RAN-CN interface message indicating a fallback procedure for the UE in DC from a core network. The MN 104 at block 1506 generates an *RRC reconfiguration* message including a measurement configuration to configure the UE to measurement a carrier frequency of a target RAT (event 412). The MN 104 at block 1508 determines whether MCG failure has occurred for the UE. If the MN 104 determines that MCG failure has occurred (events 314, 410), the MN 104 at block 1510 sends an *RRC Transfer* message including the *RRC reconfiguration* message to the SN. If the MN 104 determines MCG failure has not occurred, the MN 104 at block 1512 sends the *RRC reconfiguration* message to the UE using MCG radio resources.

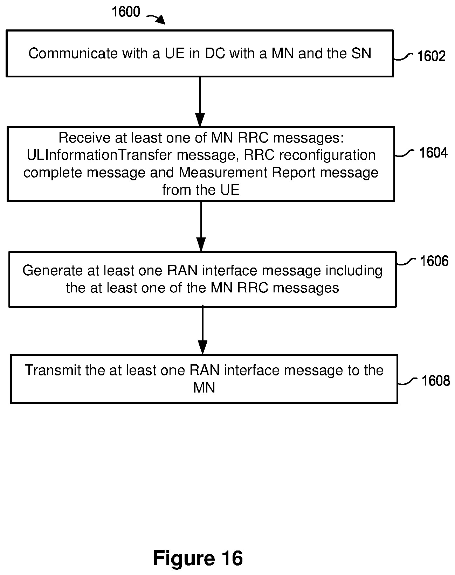

Referring next to Fig. 16, an example method 1600 for handling MN RRC messages can be implemented in the SN 106A of Fig. 1A for example. The method 1600 begins at block 1602, where the SN 106A communicates with a UE in DC with a MN and the SN 106A (events 302, 402). The SN 106A at block 1604 receives at least one of MR RRC messages: *ULInformationTransfer* message, *RRC reconfiguration complete* message and *Measurement Report message* (events 308, 416, 422). The SN 106A at block 1606 generates at least one of RAN interface message including the at least one of the MN RRC messages. The SN 106A at block 1608 transmit the at least one RAN interface message to the MN 104.

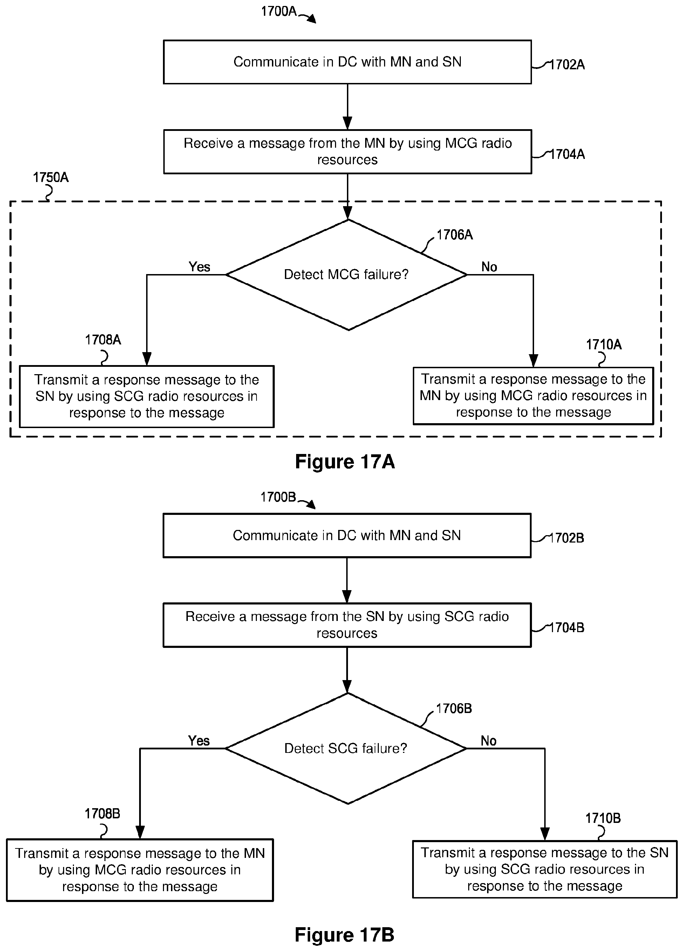

Referring next to Fig. 17A, an example method 1700A for managing transmission of a response message can be implemented in the UE 102 of Fig. 1A for example. The method 1700A begins at block 1702A, where the UE 102 is in DC with a MN and a SN (event 502A). Then the UE 102 in the DC at block 1704A receives a message from the MN by using MCG radio resources. The UE 102 at block 1706A determines whether MCG failure has occurred. If the UE 102 determines MCG failure has occurred (event 504A), the UE 102 at block 1708A transmits a response message to the SN using SCG radio resources in response to the message (event 516A). On the other hand, if the UE 102 determines that the MCG failure has not occurred, the UE 102 at block 1710A transmits a response message to the MN using MCG radio resources in response to the message. Blocks 1706A, 1708AA and 1710A are collectively referred to in Fig. 17A as block 1750A.

In some implementations, the SN can forward the response message to the MN. In other implementations, the SN can forward the response message or content of the response message to a core network (e.g., CN 110). In some implementations, the message can be an RRC message and the response message can be an RRC response message. For example, the RRC message can be an *RRC reconfiguration* message and the RRC response message can be an *RRC reconfiguration complete* message. In another example, the RRC message can be a *UEInformationRequest* message and the RRC response message can be a *UEInformationResponse* message. In yet another example, the RRC message can be a *UECapabilityEnquiry* message and the RRC response message can be a *UECapabilityInformation* message. In other implementations, the message can be an DL NAS message and the response message can be an UL NAS response message as described above.

Referring next to Fig. 17B, an example method 1700B for managing transmission of a response message can be implemented in the UE 102 of Fig. 1A for example. The method 1700B begins at block 1702B, where the UE 102 is in DC with a MN and a SN (event 502A). Then the UE 102 in the DC at block 1704B receives a message from the SN using SCG radio resources. The UE 102 at block 1706B determines whether SCG failure has occurred. If the UE 102 determines SCG failure has occurred, the UE 102 at block 1708B transmits a response message to the MN using MCG radio resources in response to the message. On the other hand, if the UE 102 determines that the SCG failure has not occurred, the UE 102 at block 1710B transmits a response message to the SN by using SCG radio resources in response to the message.

In some implementations, the SN can forward the response message to the MN. In other implementations, the SN can forward the response message or content of the response message to a core network (e.g., CN 110). In some implementations, the message can be an RRC message and the response message can be an RRC response message as described above. In other implementations, the message can be an DL NAS message and the response message can be an UL NAS response message as described above.

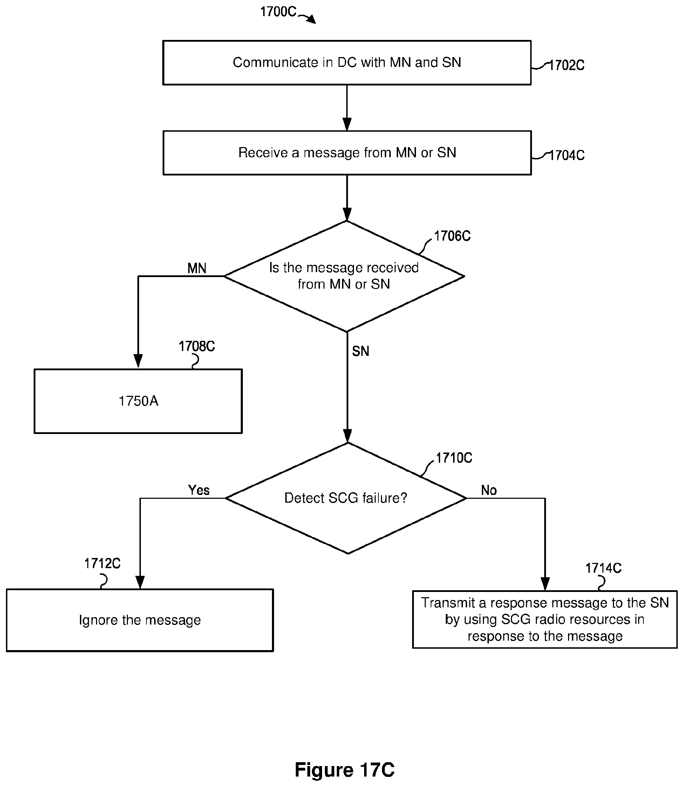

Referring next to Fig. 17C, an example method 1700C for managing transmission of a response message can be implemented in the UE 102 of Fig. 1A for example. The method 1700C begins at block 1702C, where the UE 102 is in DC with a MN and a SN (event 502A). Then the UE 102 in the DC at block 1704C receives a message for the MN or the SN. The UE 102 at block 1706A determines the message received from the MN or SN. If the message is received from the MN, the UE 102 at block 1708C performs block 1750A as described in Fig. 17A. If the message is received from the SN, the UE 102 at block 1710C determines whether SCG failure has occurred. If the UE 102 determines that SCG failure has occurred, the UE 102 at block 1712C ignores the message. On the other hand, if the UE 102 determines that the SCG failure has not occurred, the UE 102 at block 1714C transmits a response message to the SN by using SCG radio resources in response to the message.

In some implementations, the SN can forward the response message to the MN. In other implementations, the SN can forward the response message or content of the response message to a core network (e.g., CN 110). In some implementations, the message can be an RRC message and the response message can be an RRC response message as described above. In other implementations, the message can be an DL NAS message and the response message can be an UL NAS response message as described above.

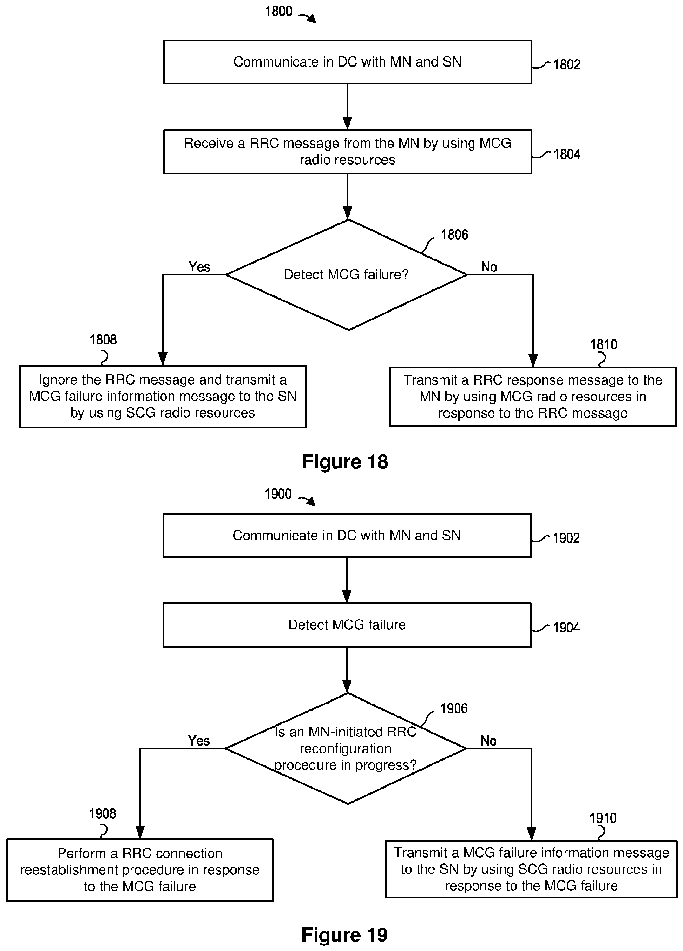

Referring next to Fig. 18, an example method 1800 for managing transmission of a response message can be implemented in the UE 102 of Fig. 1A for example. The method 1700A begins at block 1802, where the UE 102 is in DC with a MN and a SN (event 502B). The UE 102 in the DC at block 1804 then receives a RRC message from the MN using MCG radio resources. The UE 102 at block 1806 determines whether MCG failure has occurred. If the UE 102 determines MCG failure has occurred (event 504B), the UE 102 at block 1808 ignores the RRC message and transmits an MCG failure information message to the SN using SCG radio resources (events 508B, 570B). On the other hand, if the UE 102 determines that the MCG failure has not occurred, the UE 102 at block 1810 transmits an RRC response message to the MN using MCG radio resources in response to the RRC message.

In some implementations, if the UE 102 receives a DL NAS message from the MN by using MCG radio resources before the MCG failure, the UE 102 does not ignore the DL NAS message in response to the MCG failure. In one implementation, the UE 102, during the MCG failure, can transmit a UL NAS message to the SN using SCG radio resources in response to the DL NAS message. In another implementation, the UE 102 can transmit the UL MAS message to the MN using MCG radio resources after the UE 102 recovers the MCG failure.

Referring next to Fig. 19, an example method 1900 for managing ongoing RRC procedure can be implemented in the UE 102 of Fig. 1A for example. The method 1900 begins at block 1902, where the UE 102 is in DC with a MN and a SN (event 502C). The UE 102 at block 1904 determines MCG failure has occurred (event 504C). Then the UE 102 determines whether a MN-initiated RRC reconfiguration procedure is in progress. If the UE 102 determines that there is an MN-initiated RRC reconfiguration procedure in progress (event 503C), the UE 102 at block 1908 performs an RRC connection reestablishment procedure in response to the MCG failure (event 582C). On the other hand, if the UE 102 determines that there is no MN-initiated RRC reconfiguration procedure in progress, the UE 102 at block 1910 transmits an MCG failure information message to the SN by using SCG radio resources in response to the MCG failure (event 424A).

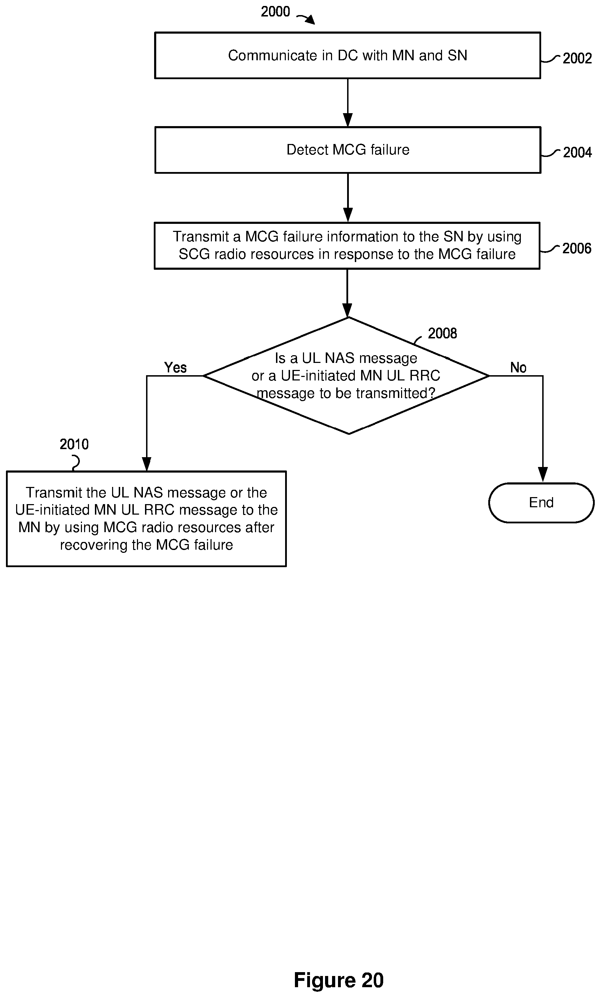

Referring next to Fig. 20, an example method 2000 for managing ongoing RRC procedure can be implemented in the UE 102 of Fig. 1A for example. The method 2000 begins at block 2002, where the UE 102 is in DC with a MN and a SN (event 302). The UE 102 at block 1904 determines MCG failure has occurred (event 304). Then the UE 102 at block 2006 transmits an MCG failure information message to the SN using SCG radio resources in response to the MCG failure. During the MCG failure, the UE 102 at block 2008 determines whether there is, according to the invention, a UL NAS message or, according to an example not covered by the claims, a UE-initiated MN UL RRC message to be transmitted. If the UE 102 determines that there is a UL NAS message to be transmitted, the UE 102 at block 2010 transmits the UL NAS message to the MN by using MCG radio resources after recovering the MCG failure. On the other hand, if the UE 102 determines that there is neither a UL NAS message nor a UE-initiated MN UL RRC message to be transmitted, the method ends.

The UL NAS message are as described above. In some implementations, the MN UL RRC message is a UL RRC message that the UE 102 transmits on SRB1 and is not an RRC response message responding to a received DL RRC message generated by the MN. For example, the MN UL RRC message can be a *UE assistance information* message. In another example, the MN UL RRC message can be a *Measurement Report* message associated to a measurement configuration configured by the MN.

In some implementations, if the UE 102 determines that there is a SN UL RRC message to be transmitted during the MCG failure, the UE 102 transmits the SN UL RRC message to the SN by using SCG radio resources. SN UL RRC message is a UL RRC message that the UE 102 transmits on SRB3. For example, the SN UL RRC message can be an *RRC reconfiguration complete* message responding to a received *RRC reconfiguration* message generated by the SN. In another example, the SN UL RRC message can be a *UE assistance information* message for the SN. In yet another example, the SN UL RRC message can be a *Measurement Report* message associated to a measurement configuration configured by the SN. In yet another example, the SN UL RRC message can be a *ULInformationTransferMRDC* message.

The following additional considerations apply to the foregoing discussion.

A user device in which the techniques of this disclosure can be implemented (*e.g*., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (*e.g.*, code, or machine-readable instructions stored on non-transitory machine-readable medium) or hardware modules. A hardware module is a tangible unit capable of performing certain operations and may be configured or arranged in a certain manner. A hardware module can include dedicated circuitry or logic that is permanently configured (*e.g*., as a special-purpose processor, such as a field programmable gate array (FPGA) or an application-specific integrated circuit (ASIC), a digital signal processor (DSP)) to perform certain operations. A hardware module may also include programmable logic or circuitry (*e.g.*, as encompassed within a general-purpose processor or other programmable processor) that is temporarily configured by software to perform certain operations. The decision to implement a hardware module in dedicated and permanently configured circuitry, or in temporarily configured circuitry (*e.g*., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method for uplink transmission in a user equipment, UE, communicating in dual connectivity, DC, with a master node, MN, and a secondary node, SN, the method comprising:
determining (2004), by the UE, that a radio connection with the MN has failed;
transmitting (2006), by the UE to the SN, an indication of the failed radio connection, using radio resources of the SN;
detecting (2008), by the UE, after the determining and before the radio connection is recovered, an uplink non-access stratum, NAS, UL NAS, message for transmission to the MN; and
transmitting, by the UE and after the radio connection with the MN is recovered, the UL NAS message to the MN, using radio resources of the MN.

2. The method of claim 1, further comprising:
performing, by the UE , a NAS procedure with a core network;
wherein the UL NAS message is associated with the NAS procedure; and
optionally, wherein the performing of the NAS procedure includes performing an evolved packet system, EPS, mobility management, EMM, procedure, an EPS session management, ESM, procedure, a 5G mobility management, 5GMM, procedure or a 5G session management, 5GSM, procedure.

3. The method of claims 1 or 2, wherein the transmitting of the NAS uplink message to the MN includes transmitting a *ULInformationTransfer* message including the UL NAS message.

4. The method of claim 1, further comprising:
receiving, by the processing hardware from the SN, an RRC reconfiguration message related to the failed radio connection; and
determining, based on the RRC reconfiguration message, whether the UE is to resume uplink transmissions using radio resources of a master cell group, MCG; and
optionally, further comprising resuming the uplink transmissions using the radio resources of the MCG in response to determining that the RRC reconfiguration message indicates mobility for a primary cell, PCell.

5. The method of claim 4, wherein the RRC reconfiguration includes a *MobilityControlInfo* information element, IE, or a *ReconfigurationWithSync* IE.

6. The method of any of the preceding claims, further comprising:
performing, by the processing hardware, a master cell group, MCG, fast recovery procedure, including:
transmitting an *MCGFailureInformation* message, as the indication of the dialed radio connection; and
receiving, from the MN via a split radio bearer leg associated with the SN, a request for RRC reconfiguration.

7. The method of any of the preceding claims, wherein the determining that the radio connection has failed includes detecting a radio link failure, RLF, on a master cell group, MCG, link, or detecting a failure of a reconfiguration procedure related to an MCG link.

8. A UE comprising processing hardware and configured to implement a method according to any of the preceding claims.

9. A method for downlink transmission in a first base station operating as a master node, MN, to provide, with a second base station operating as a secondary node, SN, dual connectivity, DC, to a UE, the method comprising:
receiving, by the MN from a core network, a downlink non-access stratum, NAS, DL NAS, message addressed to the UE;
detecting, by the MN, that a radio connection between the MN and the UE has failed;
preventing, by the MN, the MN from transmitting the DL NAS message to the UE until the radio connection has recovered; and
in response to detecting that the radio connection has recovered, transmitting the DL NAS message to the UE, using radio resources of the MN.

10. The method of claim 9, further comprising:
transmitting, by the MN to the SN, RRC reconfiguration message related to the failed radio connection.

11. The method of claim 10, further comprising:
including, in the RRC reconfiguration message, a measurement configuration for the UE.

12. The method of any of claims 9-11, further comprising:
receiving, from the UE via the SN, a measurement report related to a master cell master cell group, MCG, associated with the MN; and
initiating, by the MN in response to the measurement report, a recovery procedure to recover the radio connection with the UE.

13. The method of any of claims 9-12 , wherein:
the failed radio connection is associated with a first cell of the MCG , and
the recovered radio connection is associated with a second cell of the MCG .

14. The method of claim 9, wherein:
the preventing and the transmitting of the DL NAS using the radio resources of the MN occur in a first instance;
the method further comprising, in a second instance:
determining to direct the UE to a different base station,
discarding the DL NAS message, and
transmitting, to the core network, an indication that the MN has not delivered the DL NAS message to the UE.

15. A base station comprising processing hardware and configured to implement a method of any of claims 9-14.

## Patentansprüche

1. Verfahren zur Uplink-Übertragung in einer Benutzerausrüstung, UE (user equipment), die in dualer Konnektivität, DC (dual connectivity), mit einem Masterknoten, MN (master node), und einem sekundären Knoten, SN (secondary node), kommuniziert, wobei das Verfahren umfasst:
Bestimmen (2004), durch die UE, dass eine Funkverbindung mit dem MN fehlgeschlagen ist;
Übertragen (2006), durch die UE an den SN, einer Anzeige der fehlgeschlagenen Funkverbindung unter Verwendung von Funkressourcen des SN;
Detektieren (2008), durch die UE, nach dem Bestimmen und bevor die Funkverbindung wiederhergestellt ist, einer Uplink-Non-Access-Stratum-, NAS-, UL-NAS-Nachricht zur Übertragung an den MN; und
Übertragen, durch die UE und nachdem die Funkverbindung mit dem MN wiederhergestellt ist, der UL-NAS-Nachricht an den MN unter Verwendung von Funkressourcen des MN.

2. Verfahren nach Anspruch 1, ferner umfassend:
Durchführen, durch die UE, einer NAS-Prozedur mit einem Kernnetzwerk;
wobei die UL-NAS-Nachricht mit der NAS-Prozedur assoziiert ist;
und optional, wobei das Durchführen der NAS-Prozedur das Durchführen einer Evolved-Packet-System-, EPS-, Mobilitätsmanagement-, EMM-, Prozedur, einer EPS-Sitzungsmanagement-, ESM-, Prozedur, einer 5G-Mobilitätsmanagement-, 5GMM-, Prozedur oder einer 5G-Sitzungsmanagement-, 5GSM-, Prozedur einschließt.

3. Verfahren nach Anspruch 1 oder 2, wobei das Übertragen der NAS-Uplink-Nachricht an den MN das Übertragen einer *ULInformationTransfer-Nachricht* einschließt, die die UL-NAS-Nachricht beinhaltet.

4. Verfahren nach Anspruch 1, ferner umfassend:
Empfangen, durch die Verarbeitungshardware von dem SN, einer RRC-Rekonfigurationsnachricht, die sich auf die fehlgeschlagene Funkverbindung bezieht; und
Bestimmen, basierend auf der RRC-Rekonfigurationsnachricht, ob die UE Uplink-Übertragungen unter Verwendung von Funkressourcen einer Master-Zellengruppe, MCG, wiederaufnehmen soll; und
optional, ferner umfassend Wiederaufnehmen der Uplink-Übertragungen unter Verwendung der Funkressourcen der MCG als Reaktion auf das Bestimmen, dass die RRC-Rekonfigurationsnachricht Mobilität für eine Primärzelle, PCell, anzeigt.

5. Verfahren nach Anspruch 4, wobei die RRC-Rekonfiguration ein *MobilityControlInfo-*Informationselement*,* IE, oder ein *ReconfigurationWithSync-*IE einschließt.

6. Verfahren nach einem der vorhergehenden Ansprüche, ferner umfassend:
Durchführen, durch die Verarbeitungshardware, einer schnellen Wiederherstellungsprozedur für eine Master-Zellengruppe, MCG (master call group), einschließend:
Übertragen einer *MCGFailureInformation-*Nachricht als die Anzeige der fehlgeschlagenen Funkverbindung; und
Empfangen, von dem MN über einen mit dem SN assoziierten geteilten Funkträgerzweig, einer Anforderung zur RRC-Rekonfiguration.

7. Verfahren nach einem der vorhergehenden Ansprüche, wobei das Bestimmen, dass die Funkverbindung fehlgeschlagen ist, das Detektieren eines Funkverbindungsausfalls, RLF (radio link failure), auf einer Verbindung einer Master-Zellengruppe, MCG, oder das Detektieren eines Fehlschlags einer Rekonfigurationsprozedur in Bezug auf eine MCG-Verbindung einschließt.

8. UE, die Verarbeitungshardware umfasst und konfiguriert ist, ein Verfahren nach einem der vorhergehenden Ansprüche zu implementieren.

9. Verfahren zur Downlink-Übertragung in einer ersten Basisstation, die als ein Masterknoten, MN, betrieben wird, um mit einer zweiten Basisstation, die als ein sekundärer Knoten, SN, betrieben wird, duale Konnektivität, DC, für eine UE bereitzustellen, wobei das Verfahren umfasst:
Empfangen, durch den MN von einem Kernnetzwerk, einer Downlink-Non-Access-Stratum-, NAS-, DL-NAS-Nachricht, die an die UE adressiert ist;
Detektieren, durch den MN, dass eine Funkverbindung zwischen dem MN und der UE fehlgeschlagen ist;
Verhindern, durch den MN, dass der MN die DL-NAS-Nachricht an die UE überträgt, bis die Funkverbindung wiederhergestellt ist; und
als Reaktion auf das Detektieren, dass die Funkverbindung wiederhergestellt ist, Übertragen der DL-NAS-Nachricht an die UE unter Verwendung von Funkressourcen des MN.

10. Verfahren nach Anspruch 9, ferner umfassend:
Übertragen, durch den MN an den SN, einer RRC-Rekonfigurationsnachricht, die sich auf die fehlgeschlagene Funkverbindung bezieht.

11. Verfahren nach Anspruch 10, ferner umfassend:
Einschließen, in die RRC-Rekonfigurationsnachricht, einer Messkonfiguration für die UE.

12. Verfahren nach einem der Ansprüche 9-11, ferner umfassend:
Empfangen, von der UE über den SN, eines Messberichts in Bezug auf eine mit dem MN assoziierte Master-Zellengruppe, MCG; und
Initiieren, durch den MN als Reaktion auf den Messbericht, einer Wiederherstellungsprozedur, um die Funkverbindung mit der UE wiederherzustellen.

13. Verfahren nach einem der Ansprüche 9-12, wobei:
die fehlgeschlagene Funkverbindung mit einer ersten Zelle der MCG assoziiert ist, und
die wiederhergestellte Funkverbindung mit einer zweiten Zelle der MCG assoziiert ist.

14. Verfahren nach Anspruch 9, wobei:
das Verhindern und das Übertragen der DL-NAS unter Verwendung der Funkressourcen des MN in einem ersten Fall auftreten;
wobei das Verfahren ferner, in einem zweiten Fall, umfasst:
Bestimmen, die UE an eine andere Basisstation zu leiten,
Verwerfen der DL-NAS-Nachricht, und
Übertragen, an das Kernnetzwerk, einer Anzeige, dass der MN die DL-NAS-Nachricht nicht an die UE zugestellt hat.

15. Basisstation, die Verarbeitungshardware umfasst und konfiguriert ist, ein Verfahren nach einem der Ansprüche 9-14 zu implementieren.

## Revendications

1. Procédé de transmission en liaison montante dans un équipement utilisateur, UE, communiquant en double connectivité, DC, avec un nœud maître, MN, et un nœud secondaire, SN, le procédé comprenant :
la détermination (2004), par l'UE, qu'une connexion radio avec le MN a échoué ;
la transmission (2006), par l'UE au SN, d'une indication de la connexion radio défaillante, à l'aide de ressources radio du SN ;
la détection (2008), par l'UE, après la détermination et avant le rétablissement de la connexion radio, d'un message de strate de liaison montante non-accessible, NAS, UL NAS, destiné à être transmis au MN ; et
la transmission, par l'UE et après le rétablissement de la connexion radio avec le MN, du message UL NAS au MN, à l'aide de ressources radio du MN.

2. Procédé selon la revendication 1, comprenant également :
la réalisation, par l'UE, d'une procédure NAS avec un réseau central ;
dans lequel le message UL NAS est associé à la procédure NAS ;
et éventuellement, dans lequel la réalisation de la procédure NAS comporte la réalisation d'une procédure de gestion de mobilité, EMM, d'un système de paquets évolué, EPS, d'une procédure de gestion de session EPS, ESM, d'une procédure de gestion de mobilité 5G, 5GMM, ou d'une procédure de gestion de session 5G, 5GSM.

3. Procédé selon les revendications 1 ou 2, dans lequel la transmission du message de liaison montante NAS au MN comporte la transmission d'un message *ULInformationTransfer* comportant le message UL NAS.

4. Procédé selon la revendication 1, comprenant également :
la réception, par le matériel de traitement du SN, d'un message de reconfiguration RRC relatif à la défaillance de la connexion radio ; et
le fait de déterminer, sur la base du message de reconfiguration RRC, si l'UE doit reprendre des transmissions en liaison montante à l'aide de ressources radio d'un groupe de cellules maîtresses, MCG ; et
éventuellement, également, comprenant la reprise des transmissions en liaison montante à l'aide des ressources radio du MCG en réponse à la détermination que le message de reconfiguration RRC indique une mobilité pour une cellule primaire, PCell.

5. Procédé selon la revendication 4, dans lequel la reconfiguration RRC comporte un élément d'informations *MobilityContro-lInfo,* IE, ou un IE *ReconfigurationWithSync.*

6. Procédé selon l'une quelconque des revendications précédentes, comprenant également :
la réalisation, par le matériel de traitement, d'une procédure de récupération rapide d'un groupe de cellules maîtresses, MCG, comportant :
la transmission d'un message *MCGFailureInformation,* indiquant l'établissement de la connexion radio ; et
la réception, du MN via une branche de support radio divisée associée au SN, d'une demande de reconfiguration RRC.

7. Procédé selon l'une quelconque des revendications précédentes, dans lequel la détermination de la défaillance de la connexion radio comporte la détection d'une défaillance de liaison radio, RLF, sur une liaison de groupe de cellules maîtresses, MCG, ou la détection d'une défaillance d'une procédure de reconfiguration liée à une liaison MCG.

8. UE comprenant un matériel de traitement et configuré pour mettre en œuvre un procédé selon l'une quelconque des revendications précédentes.

9. Procédé de transmission en liaison descendante dans une première station de base fonctionnant comme nœud maître, MN, pour fournir, avec une seconde station de base fonctionnant comme nœud secondaire, SN, une double connectivité, DC, à un UE, le procédé comprenant :
la réception, par le MN en provenance d'un réseau central, d'un message de strate de liaison descendante non accessible, NAS, DL NAS, adressé à l'UE ;
la détection, par le MN, qu'une connexion radio entre le MN et l'UE a échoué ;
la prévention, par le MN, de la transmission par le MN du message DL NAS à l'UE jusqu'à ce que la connexion radio soit rétablie ; et
en réponse à la détection du rétablissement de la connexion radio, la transmission du message DL NAS à l'UE, à l'aide de ressources radio du MN.

10. Procédé selon la revendication 9, comprenant également :
la transmission, par le MN au SN, d'un message de reconfiguration RRC relatif à la défaillance de la connexion radio.

11. Procédé selon la revendication 10, comprenant également :
l'inclusion, dans le message de reconfiguration RRC, d'une configuration de mesure pour l'UE.

12. Procédé selon l'une quelconque des revendications 9 à 11, comprenant également :
la réception, de l'UE via le SN, d'un rapport de mesure relatif à un groupe de cellules maîtresses, MCG, associé au MN ; et
le lancement, par le MN en réponse au rapport de mesure, d'une procédure de récupération pour rétablir la connexion radio avec l'UE.

13. Procédé selon l'une quelconque des revendications 9 à 12, dans lequel :
la connexion radio défaillante est associée à une première cellule du MCG, et
la connexion radio rétablie est associée à une seconde cellule du MCG.

14. Procédé selon la revendication 9, dans lequel :
la prévention et la transmission du DL NAS à l'aide des ressources radio du MN se produisent dans un premier temps ;
le procédé comprenant également, dans un second temps :
la détermination de diriger l'UE vers une autre station de base,
l'ignorance du message DL NAS, et
la transmission, au réseau central, d'une indication selon laquelle le MN n'a pas transmis le message DL NAS à l'UE.

15. Station de base comprenant un matériel de traitement et configurée pour mettre en œuvre un procédé selon l'une quelconque des revendications 9 à 14.
